# EUROPÄISCHE PATENTSCHRIFT

(11) **EP 3 747 578 B1**
(45) Veröffentlichungstag und Bekanntmachung des Hinweises auf die Patenterteilung: **03.07.2024**
(21) Anmeldenummer: 20175131.0
(22) Anmeldetag: 18.05.2020
(51) Int. Cl.: B23B 31/00, B23B 31/117, B23B 31/20

(54) **SPANNVORRICHTUNG ZUM EINSPANNEN EINES GEGENSTANDS**
CHUCK FOR CLAMPING AN OBJECT
DISPOSITIF DE SERRAGE PERMETTANT DE SERRER UN OBJET

(30) Priorität: 06.06.2019 DE 102019115387
(43) Veröffentlichungstag der Anmeldung: 09.12.2020
(73) Patentinhaber: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Schwarz, Wolfgang

(56) Entgegenhaltungen:
- WO-A1-98/17430
- DE-A1-102015 113 099
- JP-A- S5 721 206
- US-A- 2 749 134
- US-A- 3 523 693

## Beschreibung

Spannvorrichtung zum Einspannen eines Gegenstands, insbesondere eines Werkzeugs Die Erfindung betrifft eine Spannvorrichtung zum Einspannen eines Gegenstands nach dem Oberbegriff des Patentanspruchs 1, eine Werkzeugaufnahme für eine Werkzeugmaschine mit einer solchen Spannvorrichtung sowie eine Werkzeugmaschine mit einer solchen Werkzeugaufnahme.

Es sind eine Vielzahl von Mechanismen bekannt, mittels denen ein Werkzeug, beispielsweise ein Fräswerkzeug, drehfest an einer Werkzeugaufnahme für eine Werkzeugmaschine eingespannt werden kann. Die Einspannung eines Werkzeugs kann dabei beispielsweise mittels eines an der Werkzeugaufnahme vorgesehenen Spannzangenfutters erfolgen. Ein derartiges Spannzangenfutter weist üblicherweise eine Spannzange auf, die in Radialrichtung federnd ist und über einen Außenkonus verfügt. Die Spannzange ist in einen Aufnahmeraum eines Basiskörpers der Werkzeugaufnahme angeordnet, durch die ein Innenkonus ausgebildet ist. Mittels einer auf den Basiskörper aufschraubbaren Spannmutter des Spannzangenfutters kann die in dem Aufnahmeraum angeordnete Spannzange in den Aufnahmeraum eingedrückt bzw. eingepresst werden. Dabei wird die Spannzange unter Wirkung der Konusflächen des Außenkonus der Spannzange und des Innenkonus des Basiskörpers in Radialrichtung zusammengedrückt und ein mit seinem Werkzeugschaft in einem Werkzeug-Aufnahmeraum der Spannzange angeordnetes Werkzeug eingespannt.

Eine Werkzeugaufnahme mit einem Spannzangenfutter ist beispielsweise aus der DE 10 2015 002 943 A1 bekannt. WO 98/17430 A1 offenbart eine Spannvorrichtung gemäß dem Oberbegriff des Anspruchs 1.

Für die gewünschte drehfeste Einspannung eines Werkzeugs mittels eines Spannzangenfutters ist es üblicherweise erforderlich, das Spannmutter-Gewinde und das korrespondierende Gewinde des Basiskörpers mit einer geringen Gewindesteigung auszuführen. Dadurch kann die erforderliche, relativ hohe Axialkraft zum Eindrücken der Spannzange in den Aufnahmeraum des Basiskörpers auch mit geringem Kraftaufwand bzw. auch bei einer manuellen Drehbetätigung der Spannmutter erreicht werden.

Aufgrund der geringen Gewindesteigung ist jedoch der Schraubweg zum Aufschrauben der Spannmutter auf den Basiskörper relativ lang. Zudem müssen bei einem Aufschrauben der Spannmutter auf den Basiskörper durch die geringe Gewindesteigung über einen langen Schraubweg hohe Reibkräfte überwunden werden. Des Weiteren werden mittels eines herkömmlichen Spannzangenfutters üblicherweise geringere Spannkräfte zum Einspannen eines Werkzeugs erreicht als bei anderen Einspannsystemen, insbesondere im Vergleich zu einem Schrumpffutter.

Aus diesen Gründen ist bei gängigen Spannzangensystemen der Spannbereich auf kleinere Werkzeugdurchmesser beschränkt.

Aufgabe der Erfindung ist es, eine Spannvorrichtung zum Einspannen eines Gegenstands, insbesondere eines Werkzeugs, bereitzustellen, mittels der der Gegenstand auf einfache und effektive Weise mit hoher Spannkraft eingespannt werden kann.

Diese Aufgabe wird durch die Merkmale der unabhängigen Ansprüche gelöst. Bevorzugte Weiterbildungen sind in den Unteransprüchen offenbart.

Gemäß Patentanspruch 1 wird eine Spannvorrichtung zum Einspannen eines Gegenstands, insbesondere eines Werkzeugs, vorgeschlagen, mit einem Basiskörper, der einen, insbesondere zylinderförmigen oder kegelförmigen, Aufnahmeraum aufweist, in dem der Gegenstand angeordnet werden kann, wobei eine Spanneinrichtung mit einer auf den Basiskörper aufschraubbaren Spannmutter vorgesehen ist, durch deren Aufschrauben auf den Basiskörper der in dem Aufnahmeraum angeordnete Gegenstand drehfest eingespannt werden kann.

Erfindungsgemäß weist die Spannmutter mehrere zylinderförmige Rollenkörper mit einer definierten Rollen-Eingriffsstruktur auf, wobei die Rollenkörper axial drehbar an einem hülsenförmigen Spannkörper der Spannmutter gehaltert sowie in Umfangsrichtung verteilt an der Spannmutter angeordnet sind.

Alternativ erfindungsgemäß dazu sind auch mehrere zylinderförmige Rollenkörper mit einer definierten Rollen-Eingriffsstruktur vorgesehen, welche gehaltert, axial drehbar und in Umfangsrichtung verteilt zwischen einem hülsenförmigen Spannkörper der Spannmutter und dem Basiskörper angeordnet sind.

Anschaulich und einfach erklärt - sehen beide erfindungsgemäße Alternativen mehrere zylinderförmige Rollenkörper mit einer definierten Rollen-Eingriffsstruktur vor, welche - soweit grundsätzlich - gehaltert, axial drehbar und in Umfangsrichtung verteilt zwischen der Spannmutter bzw. dem Spannkörper der Spannmutter und dem Basiskörper angeordnet sind. Wohingegen die erstgenannte Alternative diese Rollenkörper als Teil der Spannmutter sieht bzw. dieser zuweist, betrachtet die zweitgenannte Alternative die Rollenkörper als separate Bauteile, welche zwischen der Spannmutter bzw. dem Spannkörper der Spannmutter und dem Basiskörper angeordnet sind.

Zudem ist an dem Basiskörper der Werkzeugaufnahme wenigstens eine Basiskörper-Eingriffsstruktur ausgebildet, wobei die Rollenkörper mit ihrer Rollen-Eingriffsstruktur in Eingriff mit der wenigstens einen Basiskörper-Eingriffsstruktur des Basiskörpers sind oder bringbar sind. Weiter kann die Spannmutter mittels der miteinander in Eingriff befindlichen EingriffsstrukturAen unter Abrollen der Rollenkörper auf dem Basiskörper auf den Basiskörper aufgeschraubt und von dem Basiskörper abgeschraubt werden.

Auf diese Weise kann ein Gegenstand einfach und effektiv mit hoher Spannkraft eingespannt werden, da die Spannmutter bei dem erfindungsgemäßen Aufbau nicht entlang ihres gesamten Umfangs in Anlage bzw. in Eingriff mit dem Basiskörper ist, sondern lediglich mit den axial drehbar gehalterten Rollenkörpern. So werden die bei einem Aufschrauben der Spannmutter auf den Basiskörper wirkenden Reibkräfte deutlich verringert. Dabei muss auch lediglich Rollreibung und keine Gleitreibung wie bei herkömmlichen Gewinden überwunden werden. Dadurch kann das Schraubgewinde so gestaltet werden, dass die Spannkraft zur Einspannung eines in dem Aufnahmeraum angeordneten Gegenstands bei gleichbleibendem Kraftaufwand für die Drehbetätigung der Spannmutter effektiv erhöht wird. Damit wird es auch möglich, Gegenstände mit großem Durchmesser noch zuverlässig zu spannen.

In einer bevorzugten Ausgestaltung der erfindungsgemäßen Spannvorrichtung ist vorgesehen, dass die Basiskörper-Eingriffsstruktur durch ein Gewinde mit mindestens einer umlaufenden Gewinde-Rille gebildet ist, wobei durch die Gewinde-Rille mindestens ein außenseitig um den Basiskörper wendelförmig verlaufender Steg ausgebildet ist. Über ein derartiges, insbesondere als herkömmliches Außengewinde ausgebildetes, Schraubgewinde kann die Spannmutter funktionssicher auf den Basiskörper aufgeschraubt werden. Ein derartiges Außengewinde kann zudem besonders einfach gefertigt werden.

Bevorzugt ist das Gewinde dabei als mehrgängiges Gewinde ausgebildet, wobei insbesondere die Anzahl der Gewindegänge der Anzahl der an der Spannmutter bzw. zwischen der Spannmutter und dem Basiskörper gehalterten Rollenkörper entspricht. So kann die Spannmutter besonders einfach und funktionssicher auf den Basiskörper aufgeschraubt bzw. von dem Basiskörper abgeschraubt werden.

Alternativ kann das Gewinde aber auch durch ein eingängiges Gewinde gebildet sein.

In einer alternativen bevorzugten Ausgestaltung kann auch vorgesehen sein, dass an dem

Basiskörper mehrere in Umfangsrichtung verteilte und/oder voneinander beabstandete, Eingriffsbereiche mit jeweils einer Basiskörper-Eingriffsstruktur ausgebildet sind, wobei die Rollen mit ihrer Rollen-Eingriffsstruktur in Eingriff mit den Basiskörper-Eingriffsstrukturen des Basiskörpers sind oder bringbar sind. Dabei kann dann die Spannmutter mittels der miteinander in Eingriff befindlichen Eingriffsstrukturen der Rollenkörper und des Basiskörpers unter Abrollen der Rollenkörper auf dem Basiskörper, auf den Basiskörper aufgeschraubt und von dem Basiskörper abgeschraubt werden. So kann ein Gegenstand besonders einfach und effektiv eingespannt werden, da durch die axial drehbar gehalterten Rollenkörper in Verbindung mit den in Umfangsrichtung verteilten Eingriffsbereichen des Basiskörpers die Gestaltungsfreiheit für das Schraubgewinde zum Aufschrauben der Spannmutter auf den Basiskörper deutlich erhöht wird. Dadurch kann das Schraubgewinde im Hinblick auf die Einspannung eines in dem Aufnahmeraum des Basiskörpers angeordneten Gegenstands effektiv optimiert werden. Insbesondere ist es dabei möglich, die Spannmutter mit einem deutlich verkürzten Schraubweg auf den Basiskörper aufzuschrauben.

Zweckmäßig ist die Basiskörper-Eingriffsstruktur jedes Basiskörper-Eingriffsbereichs durch mehrere, insbesondere in Axialrichtung, voneinander beabstandete umlaufende Rillen gebildet, durch die außenseitig um den Basiskörper verlaufende Stege ausgebildet sind. Mittels derartiger Basiskörper-Eingriffsstrukturen kann die Spannmutter einfach und funktionssicher auf den Basiskörper aufgeschraubt bzw. von dem Basiskörper abgeschraubt werden. Bevorzugt ist dabei vorgesehen, dass die Basiskörper-Stege jedes Eingriffsbereichs zueinander parallel verlaufen.

Bevorzugt bilden die Rillen jedes Basiskörper-Eingriffsbereichs ein Basiskörper-Gewinde aus. Mittels der Basiskörper-Gewinde kann die Spannmutter auf effektive Weise über die in Eingriff mit den Gewinden befindlichen Rollenkörper aufgeschraubt und abgeschraubt werden. Jedes Basiskörper-Gewinde erstreckt sich dabei, in Umfangsrichtung gesehen, von einem Anfangsbereich bis zu einem Endbereich. Bevorzugt ist es dabei, wenn sich die Gewindesteigung jedes Basiskörper-Gewindes ausgehend von dem Ausgangsbereich hin zu dem Endbereich ändert, insbesondere verringert. Durch die sich ändernde Gewindesteigung kann die Einspannung eines in dem Aufnahmeraum des Basiskörpers angeordneten Gegenstands effektiv optimiert werden. Insbesondere eine Verringerung der Gewindesteigung ist dabei vorteilhaft. Dadurch kann die Spannmutter bei einem Aufschrauben auf den Basiskörper mit den Rollenkörpern zunächst über einen Bereich mit hoher Gewindesteigung geführt werden, so dass mittels der Spannmutter über einen kurzen Schraubweg ein relativ großer Axialweg zurückgelegt wird. In diesem Gewindebereich wird mittels der Spannmutter nur eine relativ geringe Spannkraft zum Einspannen eines in dem Aufnahmeraum angeordneten Gegenstands ausgeübt, so dass der Kraftaufwand zum Aufschrauben der Spannmutter trotz der hohen Gewindesteigung gering ist. Anschließend kann die Spannmutter dann mit ihren Rollenkörpern über einen Bereich mit deutlich verringerter Gewindesteigung geführt werden. In diesem Gewindebereich kann mittels der Spannmutter dann die maximale Spannkraft zum Einspannen eines in dem Aufnahmeraum angeordneten Gegenstands ausgeübt werden. Durch die geringe Gewindesteigung kann die Spannmutter dabei weiterhin mit relativ geringem Kraftaufwand auf den Basiskörper aufgeschraubt werden.

Bevorzugt können die an den Eingriffsbereichen ausgebildeten Basiskörper-Gewinde dabei mittels eines Gewindefräsers oder mittels einer Gewinde-Schleifscheibe in den Basiskörper eingebracht werden.

In einer bevorzugten konkreten Ausgestaltung weist jedes Basiskörper-Gewinde, in Draufsicht auf den Basiskörper gesehen, durchgehend oder abschnittsweise einen bogenförmigen Verlauf auf. Dadurch kann eine kontinuierliche Änderung der Gewindesteigung des Basiskörper-Gewindes und somit auch ein besonders einfaches und funktionssicheres Aufschrauben der Spannmutter auf den Basiskörper erreicht werden. Alternativ oder zusätzlich kann jedes Basiskörper-Gewinde mehrere, insbesondere zwei, Steigungsabschnitte mit unterschiedlicher konstanter Gewindesteigung aufweisen. So kann die sich ändernde Gewindesteigung auf besonders einfache Weise umgesetzt werden. Bevorzugt ist es dabei, wenn zwischen den Bereichen mit konstanter Gewindesteigung ein Übergangsbereich mit sich kontinuierlich verändernder Gewindesteigung vorgesehen ist.

Vorzugsweise ist die Rollen-Eingriffsstruktur jedes Rollenkörpers durch mehrere in Rollen-Axialrichtung voneinander beabstandete umlaufende Rillen gebildet, durch die sich in Umfangsrichtung um den jeweiligen Rollenkörper erstreckende ringförmige Stege ausgebildet sind. Mittels einer derartigen Ausgestaltung der Rollen-Eingriffsstrukturen kann die Spannmutter einfach und funktionssicher auf den Basiskörper aufgeschraubt bzw. von dem Basiskörper abgeschraubt werden.

Ferner kann es auch zweckmäßig sein, wenn die Flanken der Stege ballig ausgebildet sind. Hierdurch kann eine - kräfte-technisch - große Auflagefläche erreicht werden.

Alternativ kann die Rollen-Eingriffsstruktur auch selbst als durchgängiges (Außen-)Gewinde ausgestaltet sein, dessen Steigungsrichtung der Steigungsrichtung der Basiskörper-Gewinde entspricht. Durch diese Ausgestaltung wird eine größerer axialer Spannweg bei einem Anziehen der Spannmutter bewirkt. Gewindeflanken können wiederum auch ballig ausgebildet sein.

In einer bevorzugten konkreten Ausgestaltung weist jeder Rollenkörper stirnseitig bzw. von den Stirnwänden des Rollenkörpers abragende, insbesondere zylinderförmige, Lagerzapfen auf, mittels denen der jeweilige Rollenkörper axial drehbar an dem Spannkörper der Spannmutter gehaltert ist. So können die Rollenkörper zuverlässig und effektiv axial drehbar, d.h. um ihre Längsachse drehbar, an der Spannmutter gehaltert werden. Die Rollenkörper können dabei unmittelbar oder mittelbar bzw. über wenigstens ein Verbindungselement an dem Spannkörper gehaltert sein.

Weiter bevorzugt ist jeder Rollenkörper, insbesondere mittels der Lagerzapfen, in einem ringförmigen, insbesondere kreisringförmigen, Lagerkäfig der Spannmutter axial drehbar gelagert. Über einen derartigen Lagerkäfig können die Rollenkörper auf einfache Weise axial drehbar und mit in Umfangsrichtung definiertem Abstand zueinander an der Spannmutter bzw. an dem hülsenförmigen Spannkörper der Spannmutter befestigt werden. Bevorzugt ist dabei vorgesehen, dass der ringförmige Lagerkäfig mehrteilig mit mehreren, insbesondere im Querschnitt rechteckförmigen, Ringsegmentelementen ausgebildet ist und zumindest einem Teil der Ringsegmentelemente wenigstens ein Rollenkörper zugeordnet ist. So wird die Montage des Lagerkäfigs an die Spannmutter deutlich vereinfacht. Besonders bevorzugt ist es dabei, wenn jedem Ringsegmentelement ein einziger Rollenkörper zugeordnet ist.

Auch bevorzugt sind die Rollenkörper in einem Lagerkäfig, insbesondere einem Fensterkäfig mit Taschen für die Rollenkörper, aufgenommen.

Der Lagerkäfig, insbesondere der Fensterkäfig, kann so die Rollkörper voneinander getrennt halten, um gegenseitigen Kontakt zu vermeiden. Auch kann er die Rollkörper in gleichem Abstand halten, wodurch sich eine gleichmäßigere Lastverteilung ergibt.

Dabei können die Rollenkörper mit großem axialen Spiel in den Taschen des Fensterkäfigs aufgenommen sein, um so gegebenenfalls das Aufschrauben des mit den Rollenkörper bestückten Lagerkäfigs zu erleichtern, - oder alternativ - kann die axiale Länge der Taschen des Fensterkäfigs im Wesentlichen der axialen Länge der Rollenkörper entsprechen, wodurch wiederum gegebenenfalls eine genauere Führung möglich wird.

Weiter kann es zweckmäßig sein, wenn ausgewählte Taschen des Fensterkäfigs einen axialen Versatz gegenüber anderen Taschen des Fensterkäfigs aufweisen, insbesondere wenn jede Tasche einen axialen Versatz zu ihrem jeweiligen Nachbarn aufweist.

Dabei kann der Versatz der Taschen an eine Gewindesteigung der Basiskörper-Eingriffsstruktur und/oder einer Spannkörper-Eingriffsstruktur des hülsenförmige Spannkörper, mit welcher Spannkörper-Eingriffsstruktur der Spannkörper in Eingriff mit der Rollen-Eingriffsstruktur der Rollenkörper ist, und/oder an eine Anzahl der Rollenkörper angepasst sein.

Besonders bevorzugt ist vorgesehen, dass - in Umfangsrichtung umlaufend - jeweils benachbarte Taschen einen axialen Versatz aufweisen, welcher an der Gewindesteigung der Basiskörper-Eingriffsstruktur und/oder der Spannkörper-Eingriffsstruktur sowie an die Rollenkörper-Anzahl angepasst ist.

Die Anpassung kann bevorzugt so erfolgen, dass - sind alle Taschen gleichmäßig in Umfangsrichtung beim Lagerkäfig verteilt und ist die Rollen-Eingriffsstruktur der Rollenkörper selbst kein Gewinde - der axiale Versatz zwischen jeweils zwei benachbarten Taschen gleich groß ist und/oder der Gesamtversatz aller Taschen über den Umfang des Lagerkäfigs einer Gewindesteigung bei der Basiskörper-Eingriffsstruktur und/oder der Spannkörper-Eingriffsstruktur entspricht. Mit solchen Ausgestaltungen kann erreicht werden, dass der Lagerkäfig - mit den in diesem angeordneten Rollenkörpern - einfach und sicher auf die auf die Eingriffsstrukturen (von Spannkörper und Basiskörper) aufgeschraubt werden kann.

Bevorzugt weist der hülsenförmige Spannkörper eine Spannkörper-Eingriffsstruktur auf, mit der der Spannkörper in Eingriff mit der Rollen-Eingriffsstruktur der Rollenkörper ist. Auf diese Weise werden eine effektive Übertragung der axialen Spannkraft von den Rollenkörpern auf die Spannmutter und eine effektive Führung der Rollenkörper in Umfangsrichtung realisiert.

Bevorzugt ist die Spannkörper-Eingriffsstruktur dabei durch mehrere, insbesondere in Axialrichtung, voneinander beabstandete umlaufende Rillen gebildet, durch die sich innenseitig in Umfangsrichtung um den Spannkörper erstreckende ringförmige Stege ausgebildet sind.

Aber auch kann vorgesehen sein, dass die Spannkörper-Eingriffsstruktur durch ein Gewinde mit mindestens einer umlaufenden Gewinde-Rille gebildet ist. Die Gewinde-Rille kann dabei durch mindestens einen innenseitig in Umfangsrichtung (U) um den Spannkörper wendelförmig verlaufenden Steg ausgebildet sein.

Dabei kann hier auch vorgesehen sein, dass das Gewinde mehrere Gänge aufweist und insbesondere die Anzahl an Gewindegängen der Anzahl der Rollenkörper entspricht.

Mittels derartiger Spannkörper-Eingriffsstrukturen kann die Spannmutter einfach und funktionssicher auf den Basiskörper aufgeschraubt und von dem Basiskörper abgeschraubt werden.

Insbesondere sofern die Rollenkörper ein (Außen-)Gewinde aufweisen, ist es jedoch bevorzugt, dass die Spannkörper-Eingriffsstruktur ein zu dem Rollenkörper-Außengewinde korrespondierendes Innengewinde (bzw. (und/oder) die Basiskörper-Eingriffsstruktur ein zu dem Rollenkörper-Außengewinde korrespondierendes Außengewinde) aufweist. Mittels derartigen Ausgestaltungen können die genannten Bauteile einfach und funktionssicher gegeneinander (auf-/ab)geschraubt werden.

Auch kann vorgesehen sein, dass die Spannkörper-Eingriffsstruktur an einem innenseitigen, in Umfangsrichtung (U) umlaufenden Wandbereich des hülsenförmigen Spannkörpers (21) angeordnet ist.

In einer konkreten Ausgestaltung kann hier der hülsenförmige Spannkörper insbesondere eine innenseitig in Umfangsrichtung verlaufende Ausnehmung bzw. Vertiefung aufweisen, in der der ringförmige Lagerkäfig konturangepasst angeordnet ist. So kann der Lagerkäfig auf einfache und effektive Weise mit dem Spannkörper verbunden werden. Vorzugsweise ist der in der Ausnehmung angeordnete Lagerkäfig dabei relativ zudem Spannkörper in Umfangsrichtung verdrehbar an dem hülsenförmigen Spannkörper gehaltert. Zweckmäßig kann ein die Ausnehmung bodenseitig begrenzender Wandbereich des hülsenförmigen Spannkörpers die Spannkörper-Eingriffsstruktur ausbilden.

In einer weiteren Ausführungsform können die Abstände der Rillen der Spannkörper-Eingriffsstruktur und/oder der Rollen-Eingriffsstruktur und/oder der Basiskörper-Eingriffsstruktur derart angepasst werden, dass sich unter Beaufschlagung hoher Axialkräfte und der daraus resultierender Verformungen der Bauteile gleichmäßige Tragbilder zwischen einander zugeordneten Eingriffsstrukturen ergeben. Insbesondere kann der Abstand der Rillen in der Spannkörper-Eingriffsstruktur und/oder der Abstand der Rillen in der Basiskörper-Eingriffsstruktur kleiner gewählt werden als der Abstand der Rillen der Rollen-Eingriffsstrukturen.

In einer bevorzugten konkreten Ausgestaltung weist die Spanneinrichtung eine in dem Aufnahmeraum angeordnete, in Radialrichtung federnde Spannzange mit einem Außenkonus auf. Diese Spannzange kann mittels der Spannmutter in den, einen Innenkonus bildenden Aufnahmeraum des Basiskörpers gepresst und somit ein in einem, insbesondere zylinderförmigen, Gegenstand-Aufnahmeraum der Spannzange angeordneter Gegenstand drehfest eingespannt wird.

Insbesondere kann hier weiter auch ein ringförmiges Verbindungselement vorgesehen sein, über das die Spannmutter lösbar mit der Spannzange verbunden ist, wobei insbesondere das ringförmige Verbindungselement mittels Wälzlagern axial drehbar mit dem hülsenförmigen Spannkörper der Spannmutter verbunden ist. Eine solche Ausgestaltung ermöglicht insbesondere ein sicheres Spannen und Lösen eines Gegenstandes, wie eines Werkzeugschafts, in der Spannzange auch bei sehr hohen Spannkräften.

Weiter kann hier auch vorgesehen sein, dass das ringförmige Verbindungselement mittels einer Verriegelungsvorrichtung, insbesondere eines Bajonett-Verschlusses, mit der Spannzange verbunden bzw. verriegelbar ist. Dadurch kann erreicht werden, dass die Spannzange bei Entriegelung gewechselt werden kann, ohne dazu die Spannmutter vom Basiskörper zu lösen.

Darüber hinaus kann auch eine Verdrehsicherung zwischen der Spannzange und dem Basiskörper vorgesehen sein, wobei diese insbesondere durch axiale Fortsätze an der Spannzange und komplementären Eingriffen an dem Basiskörper ausgebildet sein können.

Über derartige Spannzangenfutter kann ein Gegenstand, wie ein Werkzeugschaft, besonders einfach und mit geringem Zeitaufwand eingespannt werden. Durch den mittels des erfindungsgemäßen Aufbaus erreichbaren, besonders kurzen Schraubweg der Spannmutter kann die Spannzange dabei besonders einfach und schnell gewechselt werden.

In einer alternativen Ausgestaltung der Spanneinrichtung kann auch vorgesehen sein, dass die Spannmutter einen mit dem Spannkörper verbundenen, insbesondere hülsenförmigen, Konuskörper aufweist, der einen, einen Innenkonus bildenden Innenkonus-Wandbereich aufweist, wobei der Konuskörper mit dem Innenkonus-Wandbereich bei einem Aufschrauben der Spannmutter auf den Basiskörper in, insbesondere flächige, Anlage mit einem, den Aufnahmeraum bildenden Aufnahmeabschnitt des Basiskörpers kommt und den Aufnahmeabschnitt, insbesondere in Radialrichtung, nach innen gegen einen in dem Aufnahmeraum angeordneten Gegenstand presst und somit den Gegenstand drehfest einspannt.

Bevorzugt kann der Basiskörper hier insbesondere im Falle der Verwendung eines solchen Konuskörpers auch Schlitze aufweisen. Dabei können die Schlitze den Konuskörper durchdringend oder als Nuten in diesem ausgebildet sein.

So kann ein Gegenstand einfach und effektiv ohne die Verwendung einer Spannzange eingespannt werden. Bei dieser Ausführungsform ist es zudem möglich, durch Verwendung von zylinderförmigen Zwischenhülsen den Aufnahmeabschnitt an verschiedene Gegenstand-Durchmesser, insbesondere Werkzeugschaft-Durchmesser, anzupassen.

Bevorzugt weist der Basiskörper einen Endanschlag auf, mit dem die Spannmutter bei einem Aufschrauben auf den Basiskörper in Anlage kommt. So kann einem ungewünschten Überdrehen der Spannmutter effektiv entgegengewirkt und ein funktionssicherer Aufbau realisiert werden. Bevorzugt ist dabei vorgesehen, dass der Endanschlag durch wenigstens einen stirnseitigen oder stirnseitig ausgerichteten Wandbereich des Basiskörpers gebildet ist. Alternativ kann der Endanschlag auch durch wenigstens einen, einen Basiskörper-Eingriffsbereich in Umfangsrichtung begrenzenden Wandbereich des Basiskörpers gebildet sein.

Bevorzugt weist die Spannvorrichtung eine Klemmeinrichtung zur Verklemmung der Spannmutter bei einem Aufschrauben auf den Basiskörper auf, wobei der hülsenförmige Spannkörper einen ringförmigen, insbesondere in Werkzeugaufnahme-Axialrichtung, von einer Stirnwand des Spannkörpers abragenden, insbesondere dünnwandigen, Klemmsteg der Klemmeinrichtung aufweist, mit dem die Spannmutter bei einem Aufschrauben auf den Basiskörper in, insbesondere flächige, Anlage mit einem korrespondierenden Klemm-Wandbereich kommt. So wird einer ungewünschten Verdrehung der Spannmutter in Bezug zum Basiskörper effektiv entgegengewirkt. Der Klemm-Wandbereich kann dabei beispielsweise durch eine, insbesondere radial, nach außen abragende ringförmige Schulter des Basiskörpers gebildet sein. Alternativ kann der Klemm-Wandbereich auch durch wenigstens ein an dem Basiskörper festgelegtes, in Werkzeugaufnahme-Axialrichtung federndes, insbesondere ringförmiges, Klemmelement gebildet sein, das durch Aufschrauben der Spannmutter mittels der Spannmutter gespannt und durch Abschrauben der Spannmutter entspannt werden kann. Ein derartiges Klemmelement kann beispielsweise durch eine Tellerfeder oder durch einen O-Ring gebildet sein.

Weiter bevorzugt kann die Spannmutter von dem Basiskörper abgenommen und auf den Basiskörper aufgesteckt werden. Dabei kann jedem Basiskörper-Eingriffsbereich eine, insbesondere in Axialrichtung verlaufende und/oder zu den Rollenkörpern konturangepasste, Aufnahmenut des Basiskörpers zugeordnet sein, in die die Rollenkörper bei einem Aufstecken der Spannmutter auf den Basiskörper mit einem Umfangsabschnitt eingeführt werden. Jeder Basiskörper-Eingriffsbereich grenzt dabei in Umfangsrichtung an die zugeordnete Aufnahmenut an. Mittels derartiger Aufnahmenuten kann die Spannmutter besonders schnell und einfach aufgeschraubt bzw. abgeschraubt werden.

Zweckmäßig kann ein den Aufnahmeraum bildender Aufnahmeabschnitt des Basiskörpers eine im Wesentlichen rotationssymmetrische Form aufweisen.

Ferner wird auch eine Werkzeugaufnahme mit der erfindungsgemäßen Spannvorrichtung beansprucht. Die sich hieraus ergebenden Vorteile sind identisch mit den bereits gewürdigten Vorteilen der erfindungsgemäßen Spannvorrichtung, so dass diese an dieser Stelle nicht wiederholt werden.

Zweckmäßig kann die Werkzeugaufnahme eine Kopplungseinrichtung aufweisen, mittels der die Werkzeugaufnahme lösbar mit einer Antriebseinrichtung zum Drehantrieb der Werkzeugaufnahme, insbesondere mit einer Werkzeugmaschinen-Antriebsspindel, gekoppelt werden kann. Die Kopplungseinrichtung kann dabei durch eine herkömmliche Schnittstelle für eine Kopplung einer Werkzeugaufnahme mit einer Werkzeugmaschine, beispielsweise durch eine Steilkegel-Schnittstelle (SK-Schnittstelle) oder durch eine Hohlschaftkegel-Schnittstelle (HSK-Schnittstelle), gebildet sein.

Des Weiteren wird auch eine Werkzeugmaschine, insbesondere eine Fräsmaschine, mit der erfindungsgemäßen Werkzeugaufnahme beansprucht. Die sich hieraus ergebenden Vorteile sind identisch mit den bereits gewürdigten Vorteilen der erfindungsgemäßen Spannvorrichtung, so dass diese hier ebenfalls nicht wiederholt werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert wird/werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- Fig. 1: in einer Perspektivdarstellung eine Werkzeugaufnahme mit einer erfindungsgemäßen Spannvorrichtung;
- Fig. 2: eine Schnittdarrstellung entlang der Schnittebene A-A aus Fig. 1;
- Fig. 3: eine Schnittdarrstellung entlang der Schnittebene B-B aus Fig. 2;
- Fig. 4: in einer Darstellung von oben einen Basiskörper der Werkzeugaufnahme;
- Fig. 5: in einer Perspektivdarstellung einen Spannkörper der Werkzeugaufnahme;
- Fig. 6: in einer Perspektivdarstellung ein Ringsegmentelement der Werkzeugaufnahme;
- Fig. 7: in einer Perspektivdarstellung einen Rollenkörper der Werkzeugaufnahme;
- Fig. 8: in einer Darstellung gemäß Fig. 2 ein zweites Ausführungsbeispiel einer Werkzeugaufnahme mit einer erfindungsgemäßen Spannvorrichtung;
- Fig. 9: in einer Darstellung gemäß Fig. 4 ein drittes Ausführungsbeispiel einer Werkzeugaufnahme mit einer erfindungsgemäßen Spannvorrichtung;
- Fig. 10: in einer Darstellung von oben einen Basiskörper eines vierten Ausführungsbeispiels einer Werkzeugaufnahme mit einer erfindungsgemäßen Spannvorrichtung; und
- Fig. 11: in einer Perspektivdarstellung einen Lagerkäfig eines fünften Ausführungsbeispiels einer Werkzeugaufnahme mit einer erfindungsgemäßen Spannvorrichtung;
- Fig. 12: in einer Darstellung gemäß Fig. 2 ein sechstes Ausführungsbeispiel einer Werkzeugaufnahme mit einer erfindungsgemäßen Spannvorrichtung;
- Fig. 13: in einer Darstellung gemäß Fig. 2 ein siebtes Ausführungsbeispiel einer Werkzeugaufnahme mit einer erfindungsgemäßen Spannvorrichtung und
- Fig. 14: in einer Perspektivdarstellung einen Lagerkäfig für das sechste oder siebte Ausführungsbeispiel der Werkzeugaufnahme mit einer erfindungsgemäßen Spannvorrichtung.

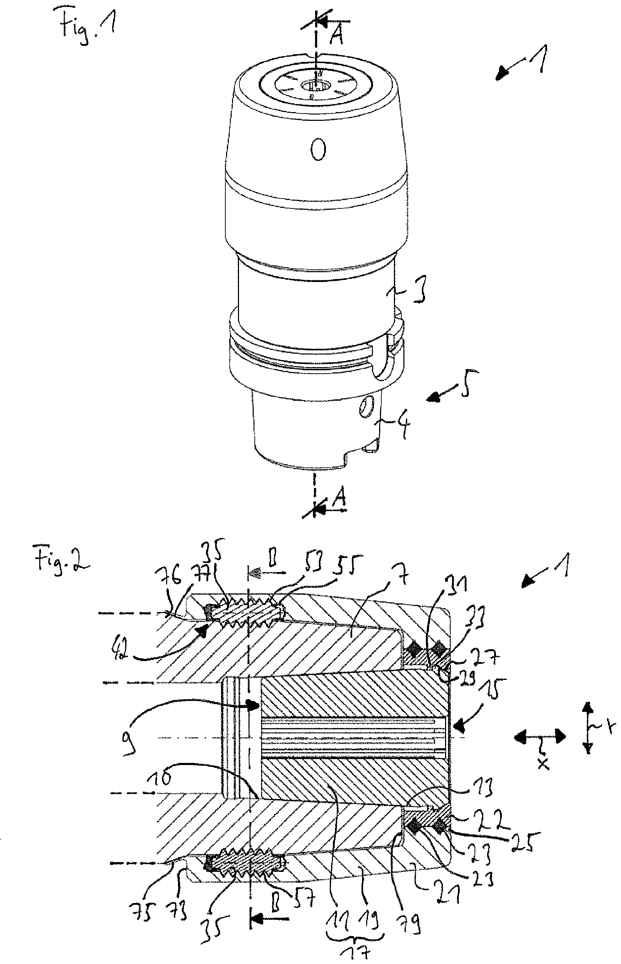

In Fig. 1 ist ein erstes Ausführungsbeispiel einer Werkzeugaufnahme 1 mit einer erfindungsgemäßen Spannvorrichtung gezeigt. Die Werkzeugaufnahme 1 weist einen Basiskörper 3 mit einem, eine Kopplungseinrichtung 4 aufweisenden Kopplungsabschnitt 5 auf. Mittels der Kopplungseinrichtung 4 kann die Werkzeugaufnahme 1 lösbar mit einer Antriebsspindel einer hier nicht gezeigten Werkzeugmaschine gekoppelt werden. Die Kopplungseinrichtung 4 ist hier beispielhaft durch eine herkömmliche HSK-Schnittstelle gebildet.

Wie weiter in Fig. 2 gezeigt ist, weist der Basiskörper 3 auch einen, hier beispielhaft rotationssymmetrischen, Aufnahmeabschnitt 7 mit einem zentral angeordneten Aufnahmeraum 9 auf. Der Aufnahmeraum 9 bildet hier einen Innenkonus 10 aus. In dem Aufnahmeraum 9 ist eine in Radialrichtung r federnde Spannzange 11 angeordnet, die einen Außenkonus 13 aufweist. Die Spannzange 11 ist Bestandteil einer Spanneinrichtung 17 der Werkzeugaufnahme 1, mittels der ein Werkzeug, beispielsweise ein Fräswerkzeug, drehfest an der Werkzeugaufnahme 1 eingespannt werden kann. Die Spannzange 11 weist dabei einen zylinderförmigen Werkzeug-Aufnahmeraum 15 auf, in dem ein einzuspannendes Werkzeug mit seinem Werkzeugschaft angeordnet werden kann.

Wie aus Fig. 2 weiter hervorgeht, weist die Spanneinrichtung 17 zudem eine auf den Basiskörper 3 aufschraubbare Spannmutter 19 auf, mittels der die Spannzange 11 in Axialrichtung bzw. Längsrichtung x in den Aufnahmeraum 9 gepresst bzw. gedrückt werden kann. Bei einem derartigen Eindrücken der Spannzange 11 wird die Spannzange 11 unter Wirkung der Konusflächen des Innenkonus 10 des Basiskörpers 3 und des korrespondierenden Außenkonus 13 der Spannzange 11 in Radialrichtung r zusammengedrückt. Dadurch kann ein in dem Werkzeug-Aufnahmeraum 15 angeordnetes Werkzeug drehfest eingespannt werden.

Die Spannmutter 19 weist einen hülsenförmigen, hier beispielhaft ebenfalls rotationssymmetrischen, Spannkörper 21 auf, mit dem die Spannmutter 19 auf den Aufnahmeabschnitt 7 des Basiskörpers 3 aufgeschoben bzw. aufgeschraubt werden kann. Im aufgeschobenen Zustand der Spannmutter 19 umgreift der hülsenförmige Spannkörper 21 den Aufnahmeabschnitt 7 ringförmig mit einem definierten Spaltabstand.

Zudem weist die Spannmutter 19 auch ein ringförmiges Verbindungselement 22 auf, über das die Spannmutter 19 lösbar mit der Spannzange 11 verbunden ist. Das ringförmige Verbindungselement 22 ist hier mittels Wälzlagern 23 axial drehbar mit dem hülsenförmigen Spannkörper 21 der Spannmutter 19 verbunden. Dabei sind die Wälzlager 23, in Radialrichtung r gesehen, außenseitig mit einem nach innen abragenden, ringförmigen Steg 25 des hülsenförmigen Spannkörpers 21 und innenseitig mit dem ringförmigen Verbindungselement 22 in Anlage. Die Wälzlager 23 sind hier durch Zylinderrollenlager gebildet.

Weiter weist das ringförmige Verbindungselement 22 auch eine nach innen abragende, ringförmige Schulter 27 mit einem Innenkonus auf, mit der das Verbindungselement 22 bei einem Aufschrauben der Spannmutter 19 in flächige Anlage mit einem stirnseitigen Wandbereich 29 der Spannzange 11 gebracht werden kann, der einen Außenkonus ausbildet. Mittels der ringförmigen Schulter 27 der Spannmutter 19 kann die Spannzange 11 bei weiterem Aufschrauben der Spannmutter 19 dann in den Aufnahmeraum 9 des Basiskörpers 3 gepresst werden.

Das Verbindungselement 22 weist zudem auch einen in Axialrichtung x von der ringförmigen Schulter 27 beabstandeten, nach innen ragenden Steg 31 auf. In Axialrichtung x gesehen, zwischen der ringförmigen Schulter 27 und dem ringförmigen Steg 31 ist zudem ein nach außen abragender Steg 33 der Spannzange 11 angeordnet. Mittels dieser Stege 31, 33 wird die Spannzange 11 bei einem Abschrauben der Spannmutter 19 von dem Basiskörper 3 aus dem Aufnahmeraum 9 des Basiskörpers 3 herausgezogen.

In einer alternativen Ausgestaltung können das Verbindungselement der Spannmutter und die Spannzange auch derart lösbar miteinander gekoppelt sein, dass die Spannzange für einen Spannzangenwechsel auch im aufgeschraubten Zustand der Spannmutter von der Spannmutter gelöst und aus dem Aufnahmeraum herausgezogen werden kann. Eine derartige Kopplung von Spannmutter und Spannzange ist beispielsweise aus der DE 10 2016 110 087 A1 bekannt, deren gesamter Inhalt durch Verweis zum Gegenstand dieser Anmeldung gemacht wird.

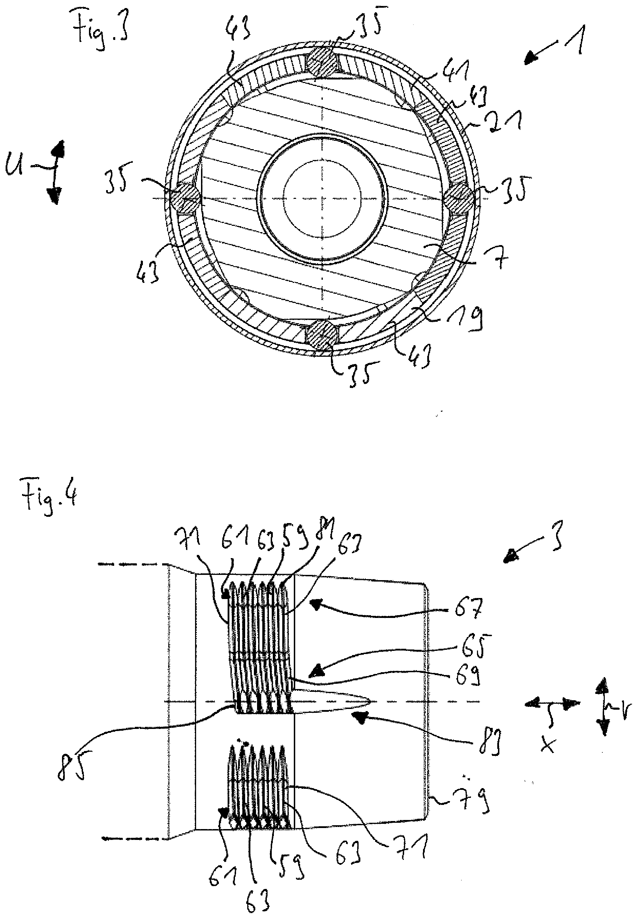

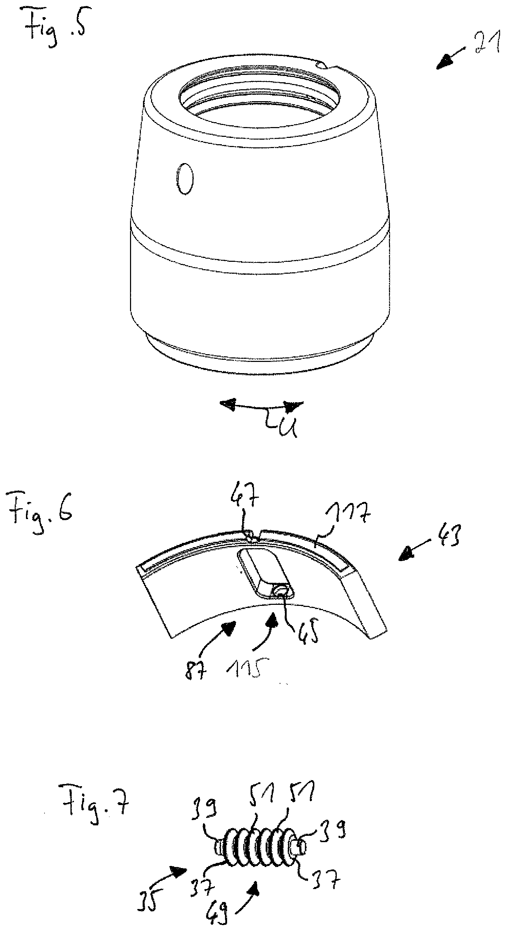

Gemäß Fig. 2 und 3 weist die Spannmutter 19 auch mehrere, hier beispielhaft vier, zylinderförmige Rollenkörper 35 auf, die in Umfangsrichtung U gleichmäßig verteilt an der Spannmutter 19 angeordnet sind. Jeder Rollenkörper 35 weist hier gemäß Fig. 7 stirnseitig bzw. von den Stirnwänden 37 abragende zylinderförmige Lagerzapfen 39 auf, mittels denen die Rollenkörper 35 axial drehbar an einem ringförmigen Lagerkäfig 41 (Fig. 3) der Spannmutter 19 gelagert sind. Der ringförmige Lagerkäfig 41 ist zusammen mit den Rollenkörpern 35 konturangepasst in einer innenseitig in Umfangsrichtung U verlaufenden Ausnehmung 42 (Fig. 2) des hülsenförmigen Spannkörpers 21 angeordnet. Dabei ist der Lagerkäfig 41 mit seitlich nach außen abragenden, länglichen Hintergriffsstegen 117 in der Ausnehmung 42 gehaltert, dergestalt, dass der Lagerkäfig 42 relativ zu dem hülsenförmigen Spannkörper 21 in Umfangsrichtung U verdreht werden kann.

Des Weiteren ist der ringförmige Lagerkäfig 41 hier mehrteilig mit mehreren, hier beispielhaft vier, im Querschnitt rechteckförmigen Ringsegmentelementen 43 (Fig. 6) ausgebildet. Jedem Ringsegmentelement 43 ist hier beispielhaft ein einziger Rollenkörper 35 zugeordnet. Dabei ist jeder Rollenkörper 35 konturangepasst in einer durchgehenden Ausnehmung 115 an einem, in Umfangsrichtung U gesehen, mittleren Bereich 87 des jeweiligen Ringsegmentelements 43 angeordnet. Zudem weist jedes Ringsegmentelement 43 an dem mittleren Bereich 87 Zapfenaufnahmen 45, 47 auf, in denen die Lagerzapfen 39 der Rollenkörper 35 konturangepasst aufgenommen sind. Die Zapfenaufnahme 45 des jeweiligen Ringsegmentelements 43 ist dabei durch eine Bohrung gebildet, während die Zapfenaufnahme 47 des jeweiligen Ringsegmentelements 43 durch einen nach außen offenen Schlitz gebildet ist. Bei der Montage der Spannmutter 19 werden die Rollenkörper 35 dabei zunächst mit einem der Lagerzapfen 39 in die Bohrung 45 und anschließend mit dem anderen der Lagerzapfen 41 in den Schlitz 47 geführt. Weiter sind hier auch an jedem Ringsegmentelement 43 seitlich nach außen abragende Hintergriffsstege 117 ausgebildet.

Gemäß Fig. 7 weist jeder Rollenkörper 35 zudem eine definierte Rollen-Eingriffsstruktur 49 auf. Die Rollen-Eingriffsstruktur 49 jedes Rollenkörpers 35 ist hier durch mehrere in Rollen-Axialrichtung voneinander beabstandete Rillen gebildet, durch die sich in Umfangsrichtung um den jeweiligen Rollenkörper 35 erstreckende ringförmige Stege 51 ausgebildet sind. Zudem ist die Längsachse der Rollenkörper 35 hier parallel zur Längsachse der Spannmutter 19 angeordnet. Alternativ könnte die Längsachse der Rollenkörper 35 aber auch mit einem definierten Anstellwinkel zur Längsachse der Spannmutter 19 ausgerichtet sein.

Die Rollenkörper 35 sind mit ihrer Rollen-Eingriffsstruktur 49 in Eingriff mit einer Spannkörper-Eingriffsstruktur 53 (Fig. 2) des Spannkörpers 21, die an einem die umlaufende Ausnehmung 42 bodenseitig begrenzenden Wandbereich 55 des Spannkörpers 21 ausgebildet ist. Die Spannkörper-Eingriffsstruktur 53 des Spannkörpers 21 ist durch mehrere in Axialrichtung x voneinander beabstandete Rillen gebildet, durch die sich in Umfangsrichtung U um den Spannkörper 21 erstreckende ringförmige Stege 57 ausgebildet sind. Die Spannkörper-Eingriffsstruktur 53 bildet dabei eine Führung für die Rollenkörper 35 in Umfangsrichtung U.

Des Weiteren weist der Basiskörper 3 der Werkzeugaufnahme 1 auch mehrere, hier beispielhaft vier, in Umfangsrichtung U gleichmäßig verteilte, voneinander beabstandete Eingriffsbereiche 61 (Fig. 4) mit einer zu der Rollen-Eingriffsstruktur 49 korrespondierenden Basiskörper-Eingriffsstruktur 59 auf. Im aufgeschraubten Zustand der Spannmutter 19 ist jeder Rollenkörper 35 mit seiner Rollen-Eingriffsstruktur 49 in Eingriff mit der Basiskörper-Eingriffsstruktur 59 eines Eingriffsbereichs 61. Die Basiskörper-Eingriffsstruktur 59 jedes Eingriffsbereichs 61 ist dabei durch mehrere voneinander beabstandete, umlaufende Rillen gebildet, durch die außenseitig um den Basiskörper 3 verlaufende Stege 63 ausgebildet sind. Die Basiskörper-Stege 63 jedes Eingriffsbereichs 61 verlaufen dabei zueinander parallel.

Die Rillen jedes Basiskörper-Eingriffsbereichs 61 bilden hier zudem ein Basiskörper-Gewinde aus. Dabei erstreckt sich jedes Basiskörper-Gewinde 61, in Umfangsrichtung U gesehen, von einem Anfangsbereich 65 bis zu einem Endbereich 67, wobei sich die Gewindesteigung jedes Basiskörper-Gewindes 61 ausgehend von dem Ausgangsbereich 65 hin zu dem Endbereich 67 verringert. Jedes Basiskörper-Gewinde 61 weist dabei einen ersten Steigungsabschnitt 69 mit einer ersten konstanten Gewindesteigung und einen zweiten Steigungsabschnitt 71 mit einer geringer als die erste Gewindesteigung ausgebildeten zweiten konstanten Gewindesteigung auf. Zwischen den Abschnitten mit konstanter Gewindesteigung 69, 71 ist ein Übergangsbereich mit sich kontinuierlich bzw. stetig verändernder Gewindesteigung vorgesehen.

Mittels der Rollen-Eingriffsstrukturen 49 der Rollenkörper 35 und der Basiskörper-Eingriffsstrukturen 59 des Basiskörpers 3 kann die Spannmutter 19 auf den Basiskörper 3 aufgeschraubt und von dem Basiskörper 3 abgeschraubt werden. Dabei wird die Spannmutter 19 bei einem Aufschrauben auf den Basiskörper 3 mit den Rollenkörpern 35 zunächst über den ersten Steigungsabschnitt 69 mit höherer Gewindesteigung geführt. Hier wird mittels der Spannmutter 19 über einen kurzen Schraubweg ein relativ großer Axialweg zurückgelegt. In diesem Gewindebereich wird mittels der Spannmutter 19 dabei nur ein geringer Druck in Axialrichtung x auf die Spannzange 11 ausgeübt. Anschließend wird die Spannmutter 19 mit ihren Spannrollen 35 über den zweiten Steigungsabschnitt 71 mit geringerer Gewindesteigung geführt. In diesem Gewindebereich wird mittels der Spannmutter 19 ein höherer bzw. der maximale Druck in Axialrichtung x auf die Spannzange 11 ausgeübt.

Die Spannmutter 19 kann zudem auch vollständig von dem Basiskörper 3 abgenommen werden. Dadurch kann beispielsweise die Spannzange 11 von der Spannmutter 19 gelöst und durch eine andere Spannzange ersetzt werden. Zum Abnehmen und Aufsetzen der Spannmutter 19 ist hier jedem Basiskörper-Eingriffsbereich 61 eine in Axialrichtung x verlaufende, zu den Rollenkörpern 35 konturangepasste Aufnahmenut 83 des Basiskörpers 3 zugeordnet. In jede Aufnahmenut 83 kann bei einem Aufstecken der Spannmutter 19 auf den Basiskörper 3 ein Rollenkörper 35 mit einem Umfangsabschnitt eingeführt werden, bis die Spannzange 11 in Anlage mit dem Basiskörper 3 kommt. Ausgehend von der jeweiligen Aufnahmenut 83 können die Rollenkörper 35 dann in den an die jeweilige Aufnahmenut 83 in Umfangsrichtung angrenzenden Basiskörper-Eingriffsbereich 61 geführt werden. Zum Abnehmen der Spannmutter 19 wird die Spannmutter 19 in einer definierten Drehposition zu dem Basiskörper 3 angeordnet, in der die Rollenkörper 35 in den Aufnahmenuten 83 angeordnet sind. In dieser Drehposition sind die Eingriffsstrukturen der Rollenkörper 35 und des Basiskörpers 3 außer Eingriff, so dass die Spannmutter 19 relativ zu dem Basiskörper 3 verschoben und von dem Basiskörper 3 abgenommen werden kann.

Des Weiteren weist die Werkzeugaufnahme 1 hier auch eine Klemmeinrichtung zur Verklemmung der Spannmutter 19 bei einem Aufschrauben auf den Basiskörper 3 auf. Die Klemmeinrichtung umfasst einen an dem Spannkörper 21 ausgebildeten, von einer hinteren Stirnwand 73 des Spannkörpers 21 abragenden, dünnwandigen Klemmsteg 75 (Fig. 2), der sich ringförmig in Umfangsrichtung U erstreckt. Mit diesem Klemmsteg 75 kommt die Spannmutter 19 bei einem Aufschrauben auf den Basiskörper 3 in flächige Anlage mit einer nach außen abragenden ringförmigen Schulter 76 des Basiskörpers 3. Konkret kommt die Spannmutter 19 hier mit dem Klemmsteg 75 in Anlage mit einem, einen Außenkonus bildenden Außenkonus-Wandbereich 77 der ringförmigen Schulter 76. Dies erfolgt hier erst dann, wenn sich die Rollenkörper 35 der Spannmutter 19 in dem zweiten Steigungsabschnitt 71 der Basiskörper-Gewinde 61 befinden. Bei weiterem Aufschrauben der Spannmutter 19 wird der Klemmsteg 75 gegen den Außenkonus-Wandbereich 77 gepresst. Auf diese Weise wird eine reibschlüssige Sicherung der Spannmutter 19 realisiert.

Weiter kann der Basiskörper 3 auch einen Endanschlag aufweisen, mit dem die Spannmutter 19 bei einem Aufschrauben auf den Basiskörper 3 in Anlage kommt. Dieser Endanschlag kann beispielsweise durch eine Stirnwand 79 des Basiskörpers 3 oder durch einen, einen Basiskörper-Eingriffsbereich 61 in Umfangsrichtung begrenzenden Wandbereich 81 des Basiskörpers 3 gebildet sein.

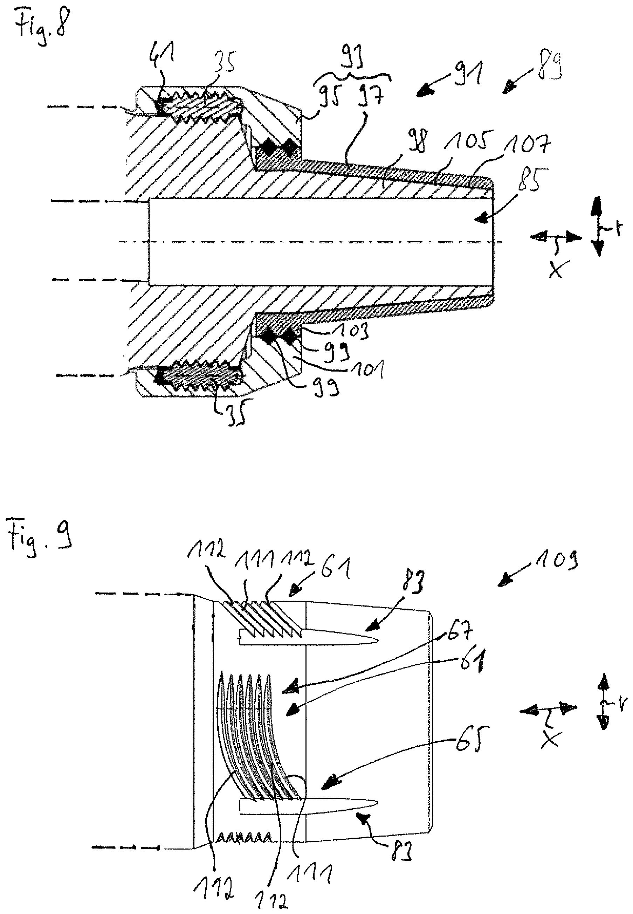

In Fig. 8 ist ein zweites Ausführungsbeispiel einer Werkzeugaufnahme 89 mit einer erfindungsgemäßen Spannvorrichtung gezeigt. Im Vergleich zu dem in den Fig. 1 bis 7 gezeigten ersten Ausführungsbeispiel weist die Werkzeugaufnahme 89 hier nicht die Spanneinrichtung 17, sondern eine Spanneinrichtung 91 zum Einspannen eines Werkzeugs auf. Die Einspannung eines Werkzeugs erfolgt bei der Spanneinrichtung 91 ohne Spannzange. Anstelle dessen weist die Spanneinrichtung 91 hier eine Spannmutter 93 mit einem hülsenförmigen Spannkörper 95 und einen mit dem Spannkörper 95 verbundenen, ebenfalls hülsenförmigen Konuskörper 97 auf. Der Lägerkäfig 41 und die daran gehalterten Rollenkörper 35 sind dabei dem Spannkörper 95 zugeordnet. Die Spannmutter 93 kann mit hülsenförmigen Spannkörper 95 und dem hülsenförmigen Konuskörper 97 auf einen Aufnahmeabschnitt 98 des Basiskörpers 3 aufgeschoben bzw. aufgeschraubt werden.

In einem zylinderförmigen, zentral angeordneten Aufnahmeraum 85 des Aufnahmeabschnitts 98 kann ein Werkzeug mit seinem Werkzeugschaft angeordnet werden. Es versteht sich, dass der Innendurchmesser des Aufnahmeabschnittes 98 unter Zuhilfenahme einer zylinderförmigen Reduzierbuchse an einen Werkzeugschaft angepasst werden kann, dessen Außendurchmesser kleiner als der Innendurchmesser des Aufnahmeabschnittes 98 ist.

Der Konuskörper 97 ist mittels Wälzlagern 99 axial drehbar mit dem Spannkörper 95 verbunden. Dabei sind die Wälzlager 99, in Radialrichtung r gesehen, außenseitig mit einem nach innen abragenden, ringförmigen Steg 101 des hülsenförmigen Spannkörpers 95 und innenseitig mit einem nach außen abragenden ringförmigen Steg 103 des Konuskörpers 97 in Anlage. Die Wälzlager 99 sind hier durch Zylinderrollenlager gebildet.

Des Weiteren weist der mit dem Spannkörper 95 verbundene Konuskörper 97 einen, einen Innenkonus bildenden Innenkonus-Wandbereich 105 auf, mit dem der Konuskörper 97 bei einem Aufschrauben der Spannmutter 93 auf den Basiskörper 3 in flächige Anlage mit einem korrespondierenden, einen Außenkonus bildenden Außenkonus-Wandbereich 107 des Aufnahmeabschnitts 98 kommt. Unter Wirkung der Konusflächen wird der Aufnahmeabschnitt 98 bei weiterem Aufschrauben der Spannmutter 93 in Radialrichtung r nach innen gegen ein in dem Aufnahmeraum 85 angeordnetes Werkzeug gepresst und dadurch das Werkzeug drehfest eingespannt.

In Fig. 9 ist ein drittes Ausführungsbeispiel einer Werkzeugaufnahme mit einer erfindungsgemäßen Spannvorrichtung gezeigt. Diese Werkzeugaufnahme weist einen Basiskörper 109 auf. Im Vergleich zu dem in den Fig. 1 bis 7 gezeigten ersten Ausführungsbeispiel weist der Basiskörper 109 hier an dem jeweiligen Eingriffsbereichen 61 eine Basiskörper-Eingriffsstruktur 111 auf. Die Rillen jedes Basiskörper-Eingriffsbereichs 111 bilden auch hier ein Basiskörper-Gewinde aus, das ausgehend von dem Anfangsbereich 65 hin zu dem Endbereich 67 eine sich verringernde Gewindesteigung aufweist. Die Basiskörper-Gewinde 111 weisen jedoch nicht mehrere Steigungsabschnitte mit unterschiedlichen konstanten Gewindesteigungen auf. Anstelle dessen weisen die Stege 112 des jeweiligen Basiskörper-Gewindes 111 hier, in der in Fig. 9 gezeigten Draufsicht auf den Basiskörper 109 gesehen, einen durchgehend bogenförmigen Verlauf auf. Dabei vergrößert sich der Krümmungsradius der bogenförmigen Stege 112 kontinuierlich ausgehend von dem Anfangsbereich 65 bis hin zu dem Endbereich 67 des Basiskörper-Gewindes 111.

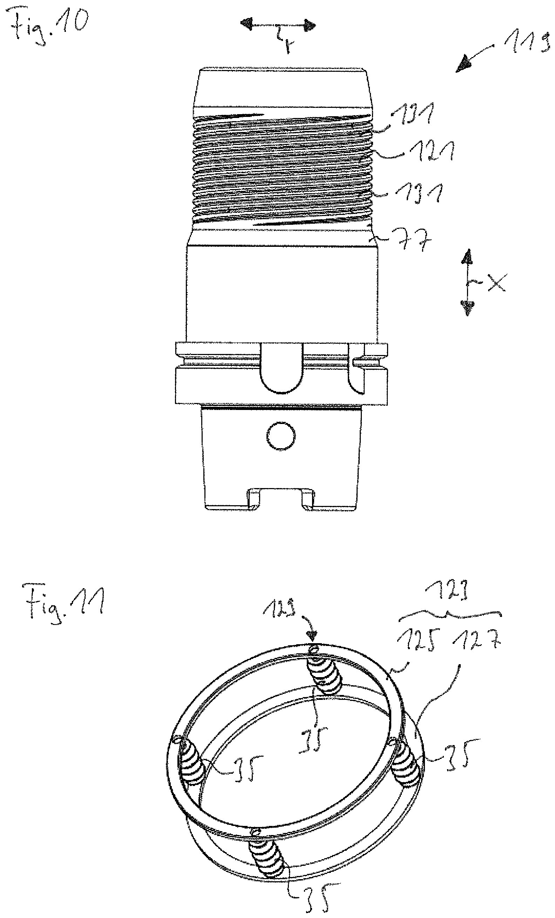

In Fig. 10 ist ein viertes Ausführungsbeispiel einer Werkzeugaufnahme mit einer erfindungsgemäßen Spannvorrichtung gezeigt. Diese Werkzeugaufnahme weist einen Basiskörper 119 auf. Im Vergleich zu dem in den Fig. 1 bis 7 gezeigten ersten Ausführungsbeispiel weist der Basiskörper 109 hier nicht mehrere Eingriffsbereichen mit jeweils einer Basiskörper-Eingriffsstruktur auf. Anstelle dessen weist der Basiskörper 119 eine einzige Basiskörper-Eingriffsstruktur 121 auf, mit der die Rollenkörper 35 der Spannmutter 19 in Eingriff bringbar sind. Mittels der miteinander in Eingriff befindlichen Eingriffsstrukturen 49, 121 des Basiskörpers 119 und der Rollenkörper 35 kann die Spannmutter 19 auf den Basiskörper 119 aufgeschraubt und von dem Basiskörper 119 abgeschraubt werden.

Die Basiskörper-Eingriffsstruktur 121 ist hier beispielhaft durch ein Gewinde mit mehreren umlaufenden Gewinde-Rillen gebildet, wobei durch die Gewinde-Rillen mehrere, hier beispielhaft vier, außenseitig um den Basiskörper 119 wendelförmig verlaufende Stege 131 ausgebildet sind. Somit ist die Basiskörper-Eingriffsstruktur 121 hier als herkömmliches viergängiges Gewinde ausgebildet. Alternativ könnte das Gewinde auch als eingängiges Gewinde ausgebildet sein.

In Fig. 11 ist ein fünftes Ausführungsbeispiel einer Werkzeugaufnahme mit einer erfindungsgemäßen Spannvorrichtung gezeigt. Diese Werkzeugaufnahme weist einen Lagerkäfig 123 auf. Im Vergleich zu dem in den Fig. 1 bis 7 gezeigten ersten Ausführungsbeispiel ist der Lagerkäfig 123 durch zwei ringförmige Aufnahmeelemente 125, 127 gebildet. Jedes Aufnahmeelement weist, entsprechend der Anzahl an Rollenkörpern 35, vier durchgängige Bohrungen 129 als Zapfenaufnahmen auf, in denen die Rollenkörper 35 konturangepasst mit ihren Lagerzapfen 39 angeordnet werden können. Im montierten Zustand der Werkzeugaufnahme ist jeder Rollenkörper 35 dann mit einem Lagerzapfen 39 in einer Bohrung 129 des ringförmigen Aufnahmeelements 125 und mit dem axial gegenüberliegenden anderen Lagerzapfen 39 in einer Bohrung 129 des Aufnahmeelements 127 angeordnet.

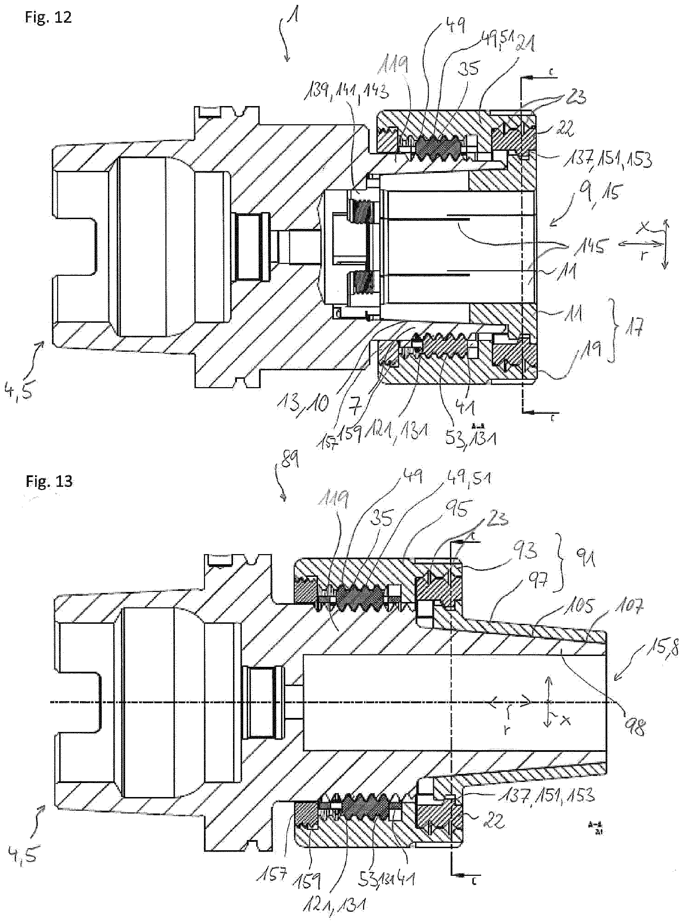

In Fig. 12 ist ein sechstes Ausführungsbeispiel einer Werkzeugaufnahme 1 mit einer erfindungsgemäßen Spannvorrichtung gezeigt.

Diese "sechste" Werkzeugaufnahme 1 ist ähnlich der nach dem ersten bzw. dem vierten Ausführungsbeispiel ausgebildet, so dass im Folgenden nicht bzw. nicht näher beschriebene Bauelemente denen aus dem ersten bzw. vierten Ausführungsbeispiel entsprechen.

Die Werkzeugaufnahme 1 weist, wie Fig. 12 zeigt, einen Basiskörper 119 mit einem, eine Kopplungseinrichtung 4 aufweisenden Kopplungsabschnitt 5 auf. Mittels der Kopplungseinrichtung 4 kann die Werkzeugaufnahme 1 lösbar mit einer Antriebsspindel einer hier nicht gezeigten Werkzeugmaschine gekoppelt werden. Die Kopplungseinrichtung 4 ist hier beispielhaft durch eine herkömmliche HSK-Schnittstelle gebildet.

Wie weiter in Fig. 12 gezeigt ist, weist der Basiskörper 119 auch einen, hier beispielhaft rotationssymmetrischen, Aufnahmeabschnitt 7 mit einem zentral angeordneten Aufnahmeraum 9 auf. Der Aufnahmeraum 9 bildet hier einen Innenkonus 10 aus. In dem Aufnahmeraum 9 ist eine in Radialrichtung r geschlitzte (145), federnde Spannzange 11 angeordnet, die einen Außenkonus 13 aufweist. Die Spannzange 11 ist Bestandteil einer Spanneinrichtung 17 der Werkzeugaufnahme 1, mittels der ein Werkzeug, beispielsweise ein Fräswerkzeug, drehfest an der Werkzeugaufnahme 1 eingespannt werden kann. Die Spannzange 11 weist dabei einen zylinderförmigen Werkzeug-Aufnahmeraum 15 auf, in dem ein einzuspannendes Werkzeug mit seinem Werkzeugschaft angeordnet werden kann.

Wie aus Fig. 12 weiter hervorgeht, weist die Spanneinrichtung 17 zudem eine auf den Basiskörper 119 aufschraubbare Spannmutter 19 auf, mittels der die Spannzange 11 in Axialrichtung bzw. Längsrichtung x in den Aufnahmeraum 9 gepresst bzw. gedrückt werden kann. Bei einem derartigen Eindrücken der Spannzange 11 wird die Spannzange 11 unter Wirkung der Konusflächen des Innenkonus 10 des Basiskörpers 119 und des korrespondierenden Au-ßenkonus 13 der Spannzange 11 in Radialrichtung r zusammengedrückt. Dadurch kann ein in dem Werkzeug-Aufnahmeraum 15 angeordnetes Werkzeug drehfest eingespannt werden.

Die Spannmutter 19 weist einen hülsenförmigen, hier beispielhaft ebenfalls rotationssymmetrischen, Spannkörper 21 auf, mit dem die Spannmutter 19 auf den Aufnahmeabschnitt 7 des Basiskörpers 3 aufgeschoben bzw. aufgeschraubt werden kann. Im aufgeschobenen Zustand der Spannmutter 19 umgreift der hülsenförmige Spannkörper 21 den Aufnahmeabschnitt 7 ringförmig mit einem definierten Spaltabstand.

Zudem weist die Spannmutter 19 auch ein ringförmiges Verbindungselement 22 auf, über das die Spannmutter 19 lösbar mit der Spannzange 11 verbunden ist. Das ringförmige Verbindungselement 22 ist hier mittels Wälzlagern 23 axial drehbar mit dem hülsenförmigen Spannkörper 21 der Spannmutter 19 verbunden. Die Wälzlager 23 sind hier durch Zylinderrollenlager gebildet.

Das Verbindungselement 22 der Spannmutter 19 und die Spannzange 11 sind über einen Bajonettverschluss 137 miteinander gekoppelt, wobei die Spannzange 11 Längs- und Querschlitze bzw. - nuten 151 vorsieht - und das Verbindungselement 22 korrespondierende Vorsprünge 153 aufweist.

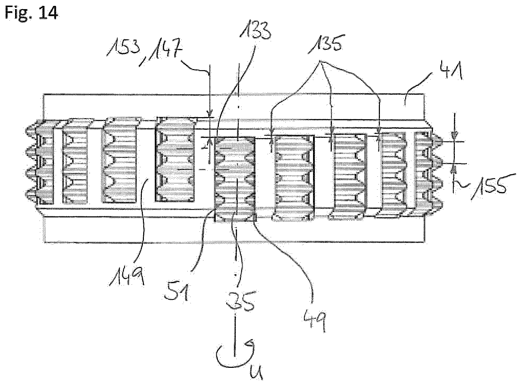

Gemäß Fig. 12 (und Fig. 14) weist die Spannvorrichtung eine Mehrzahl von zylinderförmigen Rollenkörpern 35, hier beispielsweise 20 Stück, auf, die in Umfangsrichtung U gleichmäßig verteilt durch einen Fensterkäfig 41 (in entsprechender Anzahl von Taschen 133 (hier beispielsweise 20 Stück)) gehalten zwischen der Spannmutter 19 und dem Basiskörper 119 angeordnet sind (vgl. insbesondere Fig. 14).

Gemäß Fig. 12 (und Fig. 14) weist jeder Rollenkörper 35 eine definierte Rollen-Eingriffsstruktur 49 auf. Die Rollen-Eingriffsstruktur 49 jedes Rollenkörpers 35 ist hier durch mehrere in Rollen-Axialrichtung voneinander (mit vorgebbarer Rillenbreite 155) beabstandete Rillen gebildet, durch die sich in Umfangsrichtung um den jeweiligen Rollenkörper 35 erstreckende ringförmige Stege 51 ausgebildet sind. Zudem ist die Längsachse der Rollenkörper 35 hier parallel zur Längsachse der Spannmutter 19 angeordnet.

Die Rollenkörper 35 sind mit ihrer Rollen-Eingriffsstruktur 49 in Eingriff mit einer Spannkörper-Eingriffsstruktur 53 (Fig. 12) des Spannkörpers 21, hier in Form eines eingängigen (Innen-)Gewindes, dessen Steigung an die Rillenbreite 155 angepasst ist, beispielsweise mit der Steigung 5mm (₌ Rillenbreite 155), die an der inneren Umfangsoberfläche bzw. an einem inneren Wandbereich des Spannkörpers 21 ausgebildet ist.

Des Weiteren weist der Basiskörper 119 der Werkzeugaufnahme 1 auf seiner äußeren Umfangsoberfläche bzw. an einem äußeren Wandbereich eine - zu der Spannkörper-Eingriffsstruktur 53 (Fig. 12) des Spannkörpers 21 bzw. der Rollen-Eingriffsstruktur 49 der Rollenkörper 35 - korrespondierende Basiskörper-Eingriffsstruktur 121 auf, hier so auch ein eingängiges (Außen-)Gewindes (mit der Steigung 5mm).

Im aufgeschraubten Zustand der Spannmutter 19 ist jeder Rollenkörper 35 mit seiner Rollen-Eingriffsstruktur 49 einerseits in Eingriff mit der Basiskörper-Eingriffsstruktur 121 des Basiskörpers 119, andererseits mit der Spannkörper-Eingriffsstruktur 53 (Fig. 12) des Spannkörpers 21.

Mittels der Rollen-Eingriffsstrukturen 49 der Rollenkörper 35 und der Basiskörper-Eingriffsstrukturen 121 des Basiskörpers 119 können diese miteinander verschraubt (auf-/abgeschraubt) werden; mittels der Rollen-Eingriffsstrukturen 49 der Rollenkörper 35 und der Spannkörper-Eingriffsstruktur 53 des Spannkörpers 21 können auch diese miteinander verschraubt werden bzw. die Spannmutter 19 auf den Basiskörper 119 aufgeschraubt und von dem Basiskörper 119 abgeschraubt werden.

Weiterhin sieht, wie Fig. 12 zeigt, die Spannvorrichtung eine Verdrehsicherung 139 zwischen der Spannzange 11 und dem Basiskörper 119 vor. Diese wird in diesem Fall gebildet durch axiale Fortsätze 141 an der Spannzange 11 und komplementären Eingriffen 143 an dem Basiskörper 119.

Mittels eines - einerends in die Spannmutter 19 bzw. den Spannkörper 21 der Spannmutter 19 eingeschraubten - Abdeckrings 157 erfolgt eine Abdeckung bzw. Abschirmung des Spaltes zwischen der Spannmutter 19 bzw. dem Spannkörper 21 der Spannmutter 19 und dem Basiskörpers 119 (, in welchem die im Fensterkäfig 41 aufgenommenen Rollenkörper 35 eingebracht sind). Dabei wird die Einschraubtiefe des Abdeckrings 157 in den Spannkörper 21 mittels einer Schulter 159 in dem Spannkörper 21 festgelegt, welche zugleich auch den einerendigen Beginn der Spannkörper-Eingriffsstruktur 53 (Fig. 12) des Spannkörpers 21 darstellt.

Gegebenenfalls kann - nicht gezeigt - die Werkzeugaufnahme 1 hier, wie beim ersten Ausführungsbeispiel (vgl. Fig. 2) beschrieben, auch eine Klemmeinrichtung zur Verklemmung der Spannmutter 19 bei einem Aufschrauben auf den Basiskörper 3 aufweisen wie auch einen Basiskörper-Endanschlag, mit dem die Spannmutter 19 bei einem Aufschrauben auf den Basiskörper 3 in Anlage kommt.

In Fig. 13 ist ein siebtes Ausführungsbeispiel einer Werkzeugaufnahme 89 mit einer erfindungsgemäßen Spannvorrichtung gezeigt.

Diese "siebte" Werkzeugaufnahme 1 ist ähnlich der nach dem zweiten bzw. dem vierten Ausführungsbeispiel ausgebildet, so dass im Folgenden nicht bzw. nicht näher beschriebene Bauelemente denen aus dem ersten bzw. vierten Ausführungsbeispiel entsprechen.

Im Vergleich zu dem in Fig. 12 gezeigten sechsten Ausführungsbeispiel weist die Werkzeugaufnahme 89 hier nicht die Spanneinrichtung 17, sondern eine Spanneinrichtung 91 zum Einspannen eines Werkzeugs auf. Die Einspannung eines Werkzeugs erfolgt bei der Spanneinrichtung 91 ohne Spannzange.

Anstelle dessen weist die Spanneinrichtung 91 hier eine Spannmutter 93 mit einem hülsenförmigen Spannkörper 95 und einen mit dem Spannkörper 95 (über das Verbindungselement 22) verbundenen, ebenfalls hülsenförmigen Konuskörper 97 auf.

Der mit dem Spannkörper 95 verbundene Konuskörper 97 weist, wie Fig. 13 zeigt, einen, einen Innenkonus bildenden Innenkonus-Wandbereich 105 auf, mit dem der Konuskörper 97 bei einem Aufschrauben der Spannmutter 93 auf den Basiskörper 119 in flächige Anlage mit einem korrespondierenden, einen Außenkonus bildenden Außenkonus-Wandbereich 107 des Aufnahmeabschnitts 98 kommt. Unter Wirkung der Konusflächen 105/107 wird der Aufnahmeabschnitt 98 bei weiterem Aufschrauben der Spannmutter 93 in Radialrichtung r nach innen gegen ein in dem Aufnahmeraum 85 angeordnetes Werkzeug gepresst und dadurch das Werkzeug drehfest eingespannt.

Es versteht sich auch hier wieder, dass der Innendurchmesser des Aufnahmeabschnittes 98 unter Zuhilfenahme einer zylinderförmigen Reduzierbuchse an einen Werkzeugschaft angepasst werden kann, dessen Außendurchmesser kleiner als der Innendurchmesser des Aufnahmeabschnittes 98 ist.

Auch hier bei dieser Spannvorrichtung sind ein Lagerkäfig 41 und daran gehalterte, eine Rollen-Eingriffsstruktur 49 aufweisende Rollenkörper 35 (vgl. Fig. 14) zwischen dem Spannkörper 95 und dem Basiskörper 119 angeordnet.

Die Rollenkörper 35, beispielsweise auch hier wieder 20 an der Zahl, sind auch hier wieder mit ihrer Rollen-Eingriffsstruktur 49 in Eingriff mit einer Spannkörper-Eingriffsstruktur 53 des Spannkörpers 95, die an der inneren Umfangsoberfläche bzw. an einem inneren Wandbereich des Spannkörpers 95 ausgebildet ist.

Des Weiteren weist auch hier wieder der Basiskörper 119 auf seiner äußeren Umfangsoberfläche bzw. an einem äußeren Wandbereich eine - zu der Spannkörper-Eingriffsstruktur 53 des Spannkörpers 95 bzw. der Rollen-Eingriffsstruktur 49 der Rollenkörper 35 - korrespondierende Basiskörper-Eingriffsstruktur 121 auf. Auch mit dieser stehen die Rollenkörper 35 mit ihrer Rollen-Eingriffsstruktur 49 im Eingriff.

Die Spannkörper-Eingriffsstruktur 53 und die Basiskörper-Eingriffsstruktur 121 ist jeweils wieder ein eingängiges Gewinde, mit beispielhafter Steigung von 5mm; die Rollen-Eingriffsstruktur 49 wird auch hier wieder durch - entsprechend der Steigung beabstandeter - Rillen (aus Stegen 51) gebildet.

Im aufgeschraubten Zustand der Spannmutter 19 ist jeder Rollenkörper 35 mit seiner Rollen-Eingriffsstruktur 49 einerseits in Eingriff mit der Basiskörper-Eingriffsstruktur 121 des Basiskörpers 119, andererseits mit der Spannkörper-Eingriffsstruktur 53 (Fig. 12) des Spannkörpers 95.

Mittels der Rollen-Eingriffsstrukturen 49 der Rollenkörper 35 und der Basiskörper-Eingriffsstrukturen 121 des Basiskörpers 119 können diese miteinander verschraubt (auf-/abgeschraubt) werden; mittels der Rollen-Eingriffsstrukturen 49 der Rollenkörper 35 und der Spannkörper-Eingriffsstruktur 53 des Spannkörpers 95 können auch diese miteinander verschraubt werden bzw. die Spannmutter 93 mit dem hülsenförmigen Spannkörper 95 und dem hülsenförmigen Konuskörper 97 auf den Aufnahmeabschnitt 98 des Basiskörpers 119 aufgeschoben bzw. auf-/abgeschraubt werden.

Zudem weist die Spannmutter 93 auch hier ein ringförmiges Verbindungselement 22 auf, über das die Spannmutter 93 lösbar mit dem hülsenförmigen Konuskörper 97 verbunden ist. Das ringförmige Verbindungselement 22 ist auch wieder hier mittels Wälzlagern 23 axial drehbar mit dem hülsenförmigen Spannkörper 95 der Spannmutter 93 verbunden. Die Wälzlager 23 sind hier wieder durch Zylinderrollenlager gebildet.

Das Verbindungselement 22 der Spannmutter 93 und der hülsenförmige Konuskörper 97 sind in diesem Ausführungsbeispiel wieder über einen Bajonettverschluss 137 miteinander gekoppelt, wobei der hülsenförmige Konuskörper 97 die Längs- und Querschlitze bzw. - nuten 141 vorsieht - und das Verbindungselement 22 korrespondierende Vorsprünge 143 aufweist.

Mittels eines - einerends in die Spannmutter 93 bzw. den Spannkörper 95 der Spannmutter 93 eingeschraubten - Abdeckrings 157 erfolgt eine Abdeckung bzw. Abschirmung des Spaltes zwischen der Spannmutter 93 bzw. dem Spannkörper 95 der Spannmutter 93 und dem Basiskörpers 119 (, in welchem die im Fensterkäfig 41 aufgenommenen Rollenkörper 35 eingebracht sind). Dabei wird die Einschraubtiefe des Abdeckrings 157 in den Spannkörper 95 mittels einer Schulter 159 in dem Spannkörper 95 festgelegt, welche zugleich auch den einerendigen Beginn der Spannkörper-Eingriffsstruktur 53 (Fig. 12) des Spannkörpers 95 darstellt.

Fig. 14 zeigt die Rollenkörper 35 (mit ihrer Rollen-Eingriffsstruktur 49) und ihren Fensterkäfig 41, wie er für die vorbeschriebenen Ausführungsbeispiele sechs und sieben (nach den Figu-ren 12 und 13) vorgesehen ist.

Wie Fig. 14 zeigt, werden die zylinderförmigen Rollenkörper 35, hier die beispielsweise 20 Stück, in Umfangsrichtung U gleichmäßig verteilt, durch Stege 149 des Fensterkäfigs 41 getrennt, in dem Fensterkäfig 41 (mit entsprechender Anzahl von 20 in Umfangsrichtung gleichmäßig verteilte, jeweils gleiche Taschen 133) gehalten.

Dabei entspricht die axiale Länge der Taschen 133 des Fensterkäfigs 41 im Wesentlichen der axialen Länge der Rollenkörper 35; eine Taschenbreite ist mit kleinem Spiel größer als eine Rollenbreite, so dass die Rollenkörper 35 mit Spiel in den Taschen 133 aufgenommen/gehalten werden können. Eine den Taschen 133 zugewandte Stegseite ist - entsprechend den Rollenkörper 35 - konkav gewölbt (nicht sichtbar).

Weiterhin weisen, wie Fig. 14 auch zeigt, - in Umfangsrichtung U umlaufend - jeweils benachbarte Taschen 133 einen axialen Versatz 135 auf, welcher an der Gewindesteigung der Basiskörper-Eingriffsstruktur 121 bzw. der Spannkörper-Eingriffsstruktur 53 sowie an die Rollenkörper-Anzahl angepasst ist. D.h., hier bei einer - beispielshaften - Gewindesteigung von 5mm und einer - beispielhaften - Anzahl von 20 Rollenkörper beträgt der axiale Versatz 135 0,25mm (5mm/20 Stück). In Folge dessen, bildet sich so dann zwischen der letzten und der ersten Tasche eines vollständigen Umlaufs in dem Fensterkäfig 41 ein (Gesamt-)Versatz 147 von genau der Steigung aus.

Es sei erwähnt, dass alternativ zu einem solchen stufenweisen Versatz 135 zwischen den - so jeweils axial leicht versetzten - Taschen 133 bei dem Fensterkäfig 41 auch ein kontinuierlicher Versatz - durch leichte Schrägstellung der Taschen ermöglicht werden kann. Bei den Rollenkörper käme es so zu einer leichten Schrägstellung, was das Verschrauben erleichtern könnte.

**Bezugszeichenliste**

| | | | |
|---|---|---|---|
| 1 | Werkzeugaufnahme | 35 | Rollenkörper |
| 3 | Basiskörper | 37 | Stirnwand |
| 4 | Kopplungseinrichtung | 39 | Lagerzapfen |
| 5 | Kopplungsabschnitt | 41 | Lagerkäfig |
| 7 | Aufnahmeabschnitt | 42 | Ausnehmung |
| 9 | Aufnahmeraum | 43 | Ringsegmentelement |
| 10 | Innenkonus | 45 | Zapfenaufnahme |
| 11 | Spannzange | 47 | Zapfenaufnahme |
| 13 | Außenkonus | 49 | Rollen-Eingriffsstruktur |
| 15 | Werkzeug-Aufnahmeraum | 51 | Steg |
| 17 | Spanneinrichtung | 53 | Spannkörper-Eingriffsstruktur |
| 19 | Spannmutter | 55 | Wandbereich |
| 21 | Spannkörper | 57 | Steg |
| 22 | Verbindungselement | 59 | Basiskörper-Eingriffsstruktur |
| 23 | Wälzlager | 61 | Eingriffsbereich |
| 25 | Steg | 63 | Steg |
| 27 | Schulter | 65 | Anfangsbereich |
| 29 | Wandbereich | 67 | Endbereich |
| 31 | Steg | 69 | Steigungsabschnitt |
| 33 | Steg | 71 | Steigungsabschnitt |
| 73 | Stirnwand | 111 | Basiskörper-Eingriffsstruktur |
| 75 | Bremssteg | 112 | Steg |
| 76 | Schulter | 115 | Ausnehmung |
| 77 | Außenkonus-Wandbereich | 117 | Hintergriffssteg |
| 79 | Stirnwand | 119 | Basiskörper |
| 81 | Wandbereich | 121 | Basiskörper-Eingriffsstruktur |
| 83 | Aufnahmenut | 123 | Lagerkäfig |
| 85 | Aufnahmeraum | 125 | Aufnahmeelement |
| 87 | mittlerer Bereich | 127 | Aufnahmeelement |
| 89 | Werkzeugaufnahme | 129 | Bohrung |
| 91 | Spanneinrichtung | 131 | Steg |
| 93 | Spannmutter | 133 | Tasche |
| 95 | Spannkörper | 135 | axialer Versatz |
| 97 | Konuskörper | 137 | Verriegelungsvorrichtung, Bajonettverschluss |
| 98 | Aufnahmeabschnitt | 139 | Verdrehsicherung |
| 99 | Wälzlager | 141 | Fortsatz |
| 101 | Steg | 143 | Eingriff |
| 103 | Steg | 145 | Schlitz |
| 105 | Innenkonus-Wandbereich | 147 | Gesamtversatz |
| 107 | Außenkonus-Wandbereich | 149 | Steg |
| 109 | Basiskörper | 151 | (Längs-/Quer-)Nut/Schlitz |
| | | 153 | Vorsprung |
| | | 155 | Rillenbreite |
| | | 157 | Abdeckring |
| | | 159 | Schulter |

## Patentansprüche

1. Spannvorrichtung zum Einspannen eines Gegenstands, insbesondere eines Werkzeugs, mit einem Basiskörper (3; 109; 119), der einen Aufnahmeraum (9; 100) aufweist, in dem der Gegenstand anordenbar ist, wobei eine Spanneinrichtung (17; 91) mit einer auf den Basiskörper (3; 109; 119) aufschraubbaren Spannmutter (19; 93) vorgesehen ist, durch deren Aufschrauben auf den Basiskörper (3; 109; 119) der in dem Aufnahmeraum (9; 100) angeordnete Gegenstand drehfest einspannbar ist, **dadurch gekennzeichnet,**
**dass** die Spannmutter (19; 93) mehrere zylinderförmige Rollenkörper (35) mit einer definierten Rollen-Eingriffsstruktur (49) aufweist, wobei die Rollenkörper (35) axial drehbar an einem hülsenförmigen Spannkörper (21; 95) der Spannmutter (19; 93) gehaltert sowie in Umfangsrichtung (U) verteilt an der Spannmutter (19; 93) angeordnet sind, oder dass mehrere zylinderförmige Rollenkörper (35) mit einer definierten Rollen-Eingriffsstruktur (49) gehaltert, axial drehbar und in Umfangsrichtung (U) verteilt zwischen einem hülsenförmigen Spannkörper (21; 95) der Spannmutter (19; 93) und dem Basiskörper (3; 109; 119) angeordnet sind,
**dass** an dem Basiskörper (3; 109; 119) wenigstens eine Basiskörper-Eingriffsstruktur (59; 111; 121) ausgebildet ist, wobei die Rollenkörper (35) mit ihrer Rollen-Eingriffsstruktur (49) in Eingriff mit der wenigstens einen Basiskörper-Eingriffsstruktur (59; 111; 121) des Basiskörpers (3; 109; 119) sind oder bringbar sind, und
**dass** die Spannmutter (19; 93) mittels der miteinander in Eingriff befindlichen Eingriffsstrukturen (49, 59; 111; 121) unter Abrollen der Rollenkörper (35) auf dem Basiskörper (3; 109; 119) auf den Basiskörper (3; 109; 119) aufschraubbar und von dem Basiskörper (3; 109; 119) abschraubbar ist.

2. Spannvorrichtung nach Anspruch 1, **dadurch gekennzeichnet, dass** die Basiskörper-Eingriffsstruktur (121) durch ein Gewinde mit mindestens einer umlaufenden Gewinde-Rille gebildet ist, wobei durch die Gewinde-Rille mindestens ein außenseitig um den Basiskörper (119) wendelförmig verlaufender Steg (131) ausgebildet ist, wobei bevorzugt vorgesehen ist, dass das Gewinde mehrere Gänge aufweist und insbesondere die Anzahl an Gewindegängen der Anzahl der Rollenkörper (35) entspricht.

3. Spannvorrichtung nach Anspruch 1, **dadurch gekennzeichnet, dass** an dem Basiskörper (3; 109) der Spannvorrichtung (1) mehrere, insbesondere in Umfangsrichtung (U) verteilte und/oder voneinander beabstandete, Eingriffsbereiche (61) mit einer Basiskörper-Eingriffsstruktur (59; 111) ausgebildet sind, wobei die Rollenkörper (35) mit ihrer Rollen-Eingriffsstruktur (49) in Eingriff mit den Basiskörper-Eingriffsstrukturen (59; 111) des Basiskörpers (3; 109) sind oder bringbar sind, und
dass die Spannmutter (19; 93) mittels der miteinander in Eingriff befindlichen Eingriffsstrukturen (49, 59; 111) der Rollenkörper (35) und des Basiskörpers (3; 109), insbesondere unter Abrollen der Rollenkörper (35) auf dem Basiskörper (3; 109), auf den Basiskörper (3; 109) aufschraubbar und von dem Basiskörper (3; 109) abschraubbar ist.

4. Spannvorrichtung nach einem der vorhergehenden Ansprüche, **dadurch gekennzeichnet, dass** die Rollen-Eingriffsstruktur (49) jedes Rollenkörpers (35) durch mehrere in Rollen-Axialrichtung voneinander beabstandete umlaufende Rillen gebildet ist, durch die sich in Umfangsrichtung um den jeweiligen Rollenkörper (35) erstreckende ringförmige Stege (51) ausgebildet sind, wobei insbesondere Flanken der Stege (51) ballig ausgebildet sind.

5. Spannvorrichtung nach einem der vorhergehenden Ansprüche, **dadurch gekennzeichnet, dass** jeder Rollenkörper (35) stirnseitig abragende Lagerzapfen (39) aufweist, mittels denen der jeweilige Rollenkörper (35) axial drehbar an dem Spannkörper (21) der Spannmutter (19) gehaltert ist oder dass jeder Rollenkörper (35), insbesondere mittels der Lagerzapfen (39), in einem ringförmigen, insbesondere kreisringförmigen, Lagerkäfig (41; 123) der Spannmutter (19) axial drehbar gelagert ist, wobei bevorzugt vorgesehen ist, dass der ringförmige Lagerkäfig (19) mehrteilig mit mehreren, insbesondere im Querschnitt rechteckförmigen, Ringsegmentelementen (43) ausgebildet ist und zumindest einem Teil der Ringsegmentelemente (43) wenigstens ein Rollenkörper (35) zugeordnet ist.

6. Spannvorrichtung nach einem der vorhergehenden Ansprüche, **dadurch gekennzeichnet, dass** die Rollenkörper (35) in einem Lagerkäfig (41; 123), insbesondere einem Fensterkäfig (41) mit Taschen (133) für die Rollenkörper (35), aufgenommen sind, wobei insbesondere die Rollenkörper (35) mit großem axialen Spiel in den Taschen (133) des Fensterkäfigs (41) aufgenommen sind oder die axiale Länge der Taschen (133) des Fensterkäfigs (41) im Wesentlichen der axialen Länge der Rollenkörper (35) entspricht, wobei ausgewählte Taschen (133) des Fensterkäfigs (41) einen axialen Versatz (135) gegenüber anderen Taschen (133) des Fensterkäfigs (41) aufweisen, wobei insbesondere der axiale Versatz (135) der Taschen (41) an eine Gewindesteigung der Basiskörper-Eingriffsstruktur (121) und/oder einer Spannkörper-Eingriffsstruktur (53) des hülsenförmige Spannkörpers (21, 95), mit welcher Spannkörper-Eingriffsstruktur (53) der Spannkörper (21, 95) in Eingriff mit der Rollen-Eingriffsstruktur (49) der Rollenkörper (35) ist, und/oder an eine Anzahl der Rollenkörper (35) angepasst ist.

7. Spannvorrichtung nach einem der vorhergehenden Ansprüche, **dadurch gekennzeichnet, dass** der hülsenförmige Spannkörper (21, 95) eine Spannkörper-Eingriffsstruktur (53) aufweist, mit der der Spannkörper (21, 95) in Eingriff mit der Rollen-Eingriffsstruktur (49) der Rollenkörper (35) ist, wobei bevorzugt vorgesehen ist, dass die Spannkörper-Eingriffsstruktur (53) durch mehrere voneinander beabstandete, umlaufende Rillen gebildet ist, durch die sich innenseitig in Umfangsrichtung (U) um den Spannkörper (21) erstreckende ringförmige Stege (57) ausgebildet sind oder dass die Spannkörper-Eingriffsstruktur (53) durch ein Gewinde mit mindestens einer umlaufenden Gewinde-Rille gebildet ist, wobei durch die Gewinde-Rille mindestens ein innenseitig in Umfangsrichtung (U) um den Spannkörper (21, 95) wendelförmig verlaufender Steg (131) ausgebildet ist, wobei bevorzugt vorgesehen ist, dass das Gewinde mehrere Gänge aufweist und insbesondere die Anzahl an Gewindegängen der Anzahl der Rollenkörper (35) entspricht.

8. Spannvorrichtung nach einem der vorangehenden Ansprüche, **dadurch gekennzeichnet, dass** der hülsenförmige Spannkörper (21) eine innenseitig in Umfangsrichtung (U) verlaufende Ausnehmung (42) aufweist, in der der ringförmige Lagerkäfig (41; 123) konturangepasst angeordnet ist, wobei bevorzugt vorgesehen ist, dass ein die Ausnehmung (42) bodenseitig begrenzender Wandbereich (55) des hülsenförmigen Spannkörpers (21) die Spannkörper-Eingriffsstruktur (53) des Spannkörpers (21) ausbildet und/oder dass die Spannkörper-Eingriffsstruktur (53) an einem innenseitigen, in Umfangsrichtung (U) umlaufenden Wandbereich (55) des hülsenförmigen Spannkörpers (21) angeordnet ist.

9. Spannvorrichtung nach einem der vorhergehenden Ansprüche, **dadurch gekennzeichnet, dass** die Spanneinrichtung (17) eine in dem Aufnahmeraum (9) angeordnete, in Radialrichtung (r) federnde Spannzange (11) mit einem Außenkonus aufweist, und dass die Spannzange (11) mittels der Spannmutter (19) in den, einen Innenkonus bildenden Aufnahmeraum (9) des Basiskörpers (3; 109; 119) pressbar und somit ein in einem, insbesondere zylinderförmigen, Gegenstand-Aufnahmeraum (15) der Spannzange (11) angeordneter Gegenstand drehfest einspannbar ist, wobei insbesondere ein ringförmiges Verbindungselement (22) vorgesehen ist, über das die Spannmutter (19) lösbar mit der Spannzange (11) verbunden ist, wobei insbesondere das ringförmige Verbindungselement (22) mittels Wälzlagern (23) axial drehbar mit dem hülsenförmigen Spannkörper (21) der Spannmutter (19) verbunden ist und/oder das ringförmige Verbindungselement (22) mittels einer Verriegelungsvorrichtung (137), insbesondere eines Bajonett-Verschlusses, mit der Spannzange (11) verbunden bzw. verriegelbar ist.

10. Spannvorrichtung nach einem der Ansprüche 1 bis 9, **dadurch gekennzeichnet, dass** die Spannmutter (93) einen mit dem Spannkörper (95) verbundenen, insbesondere hülsenförmigen, Konuskörper (97) aufweist, der einen, einen Innenkonus bildenden Innenkonus-Wandbereich (105) aufweist, wobei der Konuskörper (97) mit dem Innenkonus-Wandbereich (105) bei einem Aufschrauben der Spannmutter (93) auf den Basiskörper (3, 119) in, insbesondere flächige, Anlage mit einem, den Aufnahmeraum (100) bildenden Aufnahmeabschnitt (98) des Basiskörpers kommt und den Aufnahmeabschnitt (98) nach innen gegen einen in dem, insbesondere zylinderförmigen, Aufnahmeraum (100) angeordneten Gegenstand presst und somit den Gegenstand drehfest einspannt.

11. Spannvorrichtung nach einem der vorhergehenden Ansprüche, **dadurch gekennzeichnet, dass** der Basiskörper (3) Schlitze und/oder einen Endanschlag aufweist, mit welchem Endanschlag die Spannmutter (19) bei einem Aufschrauben auf den Basiskörper (3) in Anlage kommt, wobei bevorzugt vorgesehen ist, dass der Endanschlag durch wenigstens einen stirnseitigen oder stirnseitig ausgerichteten Wandbereich (79) des Basiskörpers oder durch wenigstens einen, einen Basiskörper-Eingriffsbereich (61) in Umfangsrichtung (U) begrenzenden Wandbereich (81) des Basiskörpers (3) gebildet ist.

12. Spannvorrichtung nach einem der vorhergehenden Ansprüche, **dadurch gekennzeichnet, dass** eine Klemmeinrichtung zur Verklemmung der Spannmutter (19; 93) bei einem Aufschrauben auf den Basiskörper (3; 109; 119) vorgesehen ist, wobei der hülsenförmige Spannkörper (21; 95) einen ringförmigen, von einer Stirnwand (73) des hülsenförmigen Spannkörpers (21) abragenden, insbesondere dünnwandigen, Klemmsteg (75) der Klemmeinrichtung aufweist, mit dem die Spannmutter (19; 93) bei einem Aufschrauben auf den Basiskörper (3; 109; 119) in, insbesondere flächige, Anlage mit einem korrespondierenden Anlage-Wandbereich kommt.

13. Werkzeugaufnahme für eine Werkzeugmaschine, insbesondere für eine Fräsmaschine, mit einer Spannvorrichtung nach einem der vorhergehenden Ansprüche.

14. Werkzeugaufnahme nach Anspruch 13, **dadurch gekennzeichnet, dass** die Werkzeugaufnahme (1) eine Kopplungseinrichtung (4) aufweist, mittels der die Werkzeugaufnahme (1) mit einer Antriebseinrichtung zum Drehantrieb der Werkzeugaufnahme, insbesondere mit einer Antriebsspindel einer Werkzeugmaschine, koppelbar ist.

15. Werkzeugmaschine, insbesondere Fräsmaschine, mit einer Werkzeugaufnahme (1) nach Anspruch 13 oder 14.

## Claims

1. Chucking apparatus for clamping an object, in particular a tool, in place, having a basic body (3; 109; 119) which has a receiving space (9; 100) in which the object is able to be arranged, wherein provision is made of a chucking device (17; 91) with a chucking nut (19; 93) which is able to be screwed onto the basic body (3; 109; 119), the object arranged in the receiving space (9; 100) being able to be clamped in place in a rotationally conjoint manner as a result of the screwing of said chucking nut onto the basic body (3; 109; 119), **characterized**
**in that** the chucking nut (19; 93) has multiple cylindrical roller bodies (35) with a defined roller engagement structure (49), wherein the roller bodies (35) are arranged in an axially rotatable manner on the chucking nut (19; 93) so as to be distributed in a circumferential direction (U) and held on a sleeve-like chucking body (21; 95) of the chucking nut (19; 93), or in that multiple cylindrical roller bodies (35) with a defined roller engagement structure (49) are arranged held in an axially rotatable manner between a sleeve-like chucking body (21; 95) of the chucking nut (19; 93) and the basic body (3; 109; 119) so as to be distributed in a circumferential direction (U),
**in that** at least one basic-body engagement structure (59; 111; 121) is formed on the basic body (3; 109; 119), wherein the roller bodies (35) are in engagement or are able to be brought into engagement by way of their roller engagement structure (49) with the at least one basic-body engagement structure (59; 111; 121) of the basic body (3; 109; 119), and
**in that** the chucking nut (19; 93) is able to be screwed onto the basic body (3; 109; 119) and is able to be unscrewed from the basic body (3; 109; 119) by means of the interengaging engagement structures (49, 59; 111; 121), with the roller bodies (35) rolling on the basic body (3; 109; 119).

2. Chucking apparatus according to Claim 1, **characterized in that** the basic-body engagement structure (121) is formed by a thread with at least one peripheral thread groove, wherein, as a result of the thread groove, at least one web (131) running in a helical manner around the outside of the basic body (119) is formed, wherein it is preferably provided that the thread has multiple starts and, in particular, the number of thread starts corresponds to the number of roller bodies (35).

3. Chucking apparatus according to Claim 1, **characterized in that** multiple engagement regions (61) with a basic-body engagement structure (59; 111) that are in particular distributed in the circumferential direction (U) and/or spaced apart from one another are formed on the basic body (3; 109) of the chucking apparatus (1), wherein the roller bodies (35) are in engagement or are able to be brought into engagement by way of their roller engagement structure (49) with the basic-body engagement structures (59; 111) of the basic body (3; 109), and
**in that** the chucking nut (19; 93) is able to be screwed onto the basic body (3; 109) and is able to be unscrewed from the basic body (3; 109) by means of the interengaging engagement structures (49, 59; 111) of the roller bodies (35) and of the basic body (3; 109), in particular with the roller bodies (35) rolling on the basic body (3; 109).

4. Chucking apparatus according to one of the preceding claims, **characterized in that** the roller engagement structure (49) of each roller body (35) is formed by multiple peripheral grooves which are spaced apart from one another in a roller axial direction and by way of which annular webs (51) extending in the circumferential direction around the respective roller body (35) are formed, wherein in particular flanks of the webs (51) are of convex form.

5. Chucking apparatus according to one of the preceding claims, **characterized in that** each roller body (35) has bearing pins (39) which protrude at end faces and by means of which the respective roller body (35) is held in an axially rotatable manner on the chucking body (21) of the chucking nut (19), or **in that** each roller body (35), in particular by means of the bearing pins (39), is mounted in an axially rotatable manner in an annular, in particular circular-ring-shaped, bearing cage (41; 123) of the chucking nut (19), wherein it is preferably provided that the annular bearing cage (19) is formed in multiple parts with multiple, in particular cross-sectionally rectangular, ring-segment elements (43) and at least some of the ring-segment elements (43) are assigned at least one roller body (35).

6. Chucking apparatus according to one of the preceding claims, **characterized in that** the roller bodies (35) are accommodated in a bearing cage (41; 123), in particular a window-type cage (41) with pockets (133) for the roller bodies (35), wherein in particular the roller bodies (35) are accommodated in the pockets (133) of the window-type cage (41) with a large amount of axial play, or the axial length of the pockets (133) of the window-type cage (41) corresponds substantially to the axial length of the roller bodies (35), wherein selected pockets (133) of the window-type cage (41) have an axial offset (135) in relation to other pockets (133) of the window-type cage (41), wherein in particular the axial offset (135) of the pockets (41) is adapted to a thread lead of the basic-body engagement structure (121) and/or of a chucking-body engagement structure (53) of the sleeve-like chucking body (21, 95), by way of which chucking-body engagement structure (53) the chucking body (21, 95) is in engagement with the roller engagement structure (49) of the roller bodies (35), and/or to a number of roller bodies (35).

7. Chucking apparatus according to one of the preceding claims, **characterized in that** the sleeve-like chucking body (21, 95) has a chucking-body engagement structure (53) by way of which the chucking body (21, 95) is in engagement with the roller engagement structure (49) of the roller bodies (35), wherein it is preferably provided that the chucking-body engagement structure (53) is formed by multiple peripheral grooves which are spaced apart from one another and by way of which annular webs (57) extending in the circumferential direction (U) around the inside of the chucking body (21) are formed, or that the chucking-body engagement structure (53) is formed by a thread with at least one peripheral thread groove, wherein, as a result of the thread groove, at least one web (131) running in a helical manner in the circumferential direction (U) around the inside of the chucking body (21, 95) is formed, wherein it is preferably provided that the thread has multiple starts and, in particular, the number of thread starts corresponds to the number of roller bodies (35) .

8. Chucking apparatus according to one of the preceding claims, **characterized in that** the sleeve-like chucking body (21) has a recess (42) which extends at the inside in the circumferential direction (U) and in which the annular bearing cage (41; 123) is arranged in a contour-adapted manner, wherein it is preferably provided that a wall region (55) of the sleeve-like chucking body (21), which wall region delimits the recess (42) at the base side, forms the chucking-body engagement structure (53) of the chucking body (21), and/or that the chucking-body engagement structure (53) is arranged on an innerside wall region (55) of the sleeve-like chucking body (21), which wall region runs around in the circumferential direction (U).

9. Chucking apparatus according to one of the preceding claims, **characterized in that** the chucking device (17) has a collet (11) with an outer cone, which collet is arranged in the receiving space (9) and is resilient in a radial direction (r), and **in that** the collet (11) is able to be pressed into the receiving space (9), forming an inner cone, of the basic body (3; 109; 119) by means of the chucking nut (19) and an object arranged in an in particular cylindrical object-receiving space (15) of the collet (11) is thereby able to be clamped in place in a rotationally conjoint manner, wherein provision is in particular made of an annular connecting element (22) via which the chucking nut (19) is connected in a releasable manner to the collet (11), wherein in particular the annular connecting element (22) is connected in an axially rotatable manner to the sleeve-like chucking body (21) of the chucking nut (19) by means of rolling bearings (23) and/or the annular connecting element (22) is connected or locked to the collet (11) by means of a locking device (137), in particular a bayonet fitting.

10. Chucking apparatus according to one of Claims 1 to 9, **characterized in that** the chucking nut (93) has an in particular sleeve-like cone body (97) which is connected to the chucking body (95) and which has an inner-cone wall region (105) which forms an inner cone, wherein the cone body (97), when the chucking nut (93) is screwed onto the basic body (3; 119), by way of the inner-cone wall region (105), comes into in particular areal abutment with a receiving portion (98), forming the receiving space (100), of the basic body and presses the receiving portion (98) inwards against an object arranged in the in particular cylindrical receiving space (100) and thereby clamps the object in place in a rotationally conjoint manner.

11. Chucking apparatus according to one of the preceding claims, **characterized in that** the basic body (3) has slots and/or a limit stop, with which limit stop the chucking nut (19) comes into abutment when being screwed onto the basic body (3), wherein it is preferably provided that the limit stop is formed by at least one end-face wall region (79), or wall region with end-face orientation, of the basic body or by at least one wall region (81) of the basic body (3) that delimits a basic-body engagement region (61) in the circumferential direction (U).

12. Chucking apparatus according to one of the preceding claims, **characterized in that** provision is made of a clamping device for clamping the chucking nut (19; 93) when the latter is screwed onto the basic body (3; 109; 119), wherein the sleeve-like chucking body (21; 95) has an annular, in particular thin-walled, clamping web (75) of the clamping device that protrudes from an end wall (73) of the sleeve-like chucking body (21), by way of which clamping web the chucking nut (19; 93) comes into in particular areal abutment with a corresponding abutment wall region when being screwed onto the basic body (3; 109; 119) .

13. Tool receptacle for a machine tool, in particular for a milling machine, having a chucking apparatus according to one of the preceding claims.

14. Tool receptacle according to Claim 13, **characterized in that** the tool receptacle (1) has a coupling device (4) by means of which the tool receptacle (1) is able to be coupled to a drive device for driving the tool receptacle in rotation, in particular to a drive spindle of a machine tool.

15. Machine tool, in particular milling machine, having a tool receptacle (1) according to Claim 13 or 14.

## Revendications

1. Dispositif de serrage pour serrer un objet, notamment un outil, avec un corps de base (3 ; 109 ; 119) qui présente un espace de logement (9 ; 100) dans lequel l'objet peut être agencé, un appareil de serrage (17 ; 91) avec un écrou de serrage (99 ; 93) pouvant être vissé sur le corps de base (3 ; 109 ; 119) étant prévu, dont le vissage sur le corps de base (3 ; 109 ; 119) permet de serrer l'objet agencé dans l'espace de logement (9 ; 100) de manière solidaire en rotation, **caractérisé en ce que**
l'écrou de serrage (19 ; 93) présente plusieurs corps de rouleaux cylindriques (35) avec une structure d'engagement de rouleau (49) définie, les corps de rouleaux (35) étant maintenus de manière axialement rotative sur un corps de serrage en forme de douille (21 ; 95) de l'écrou de serrage (19 ; 93) et étant agencés répartis dans la direction périphérique (U) sur l'écrou de serrage (19 ; 93) ; 93), ou **en ce que** plusieurs corps de rouleaux cylindriques (35) avec une structure d'engagement de rouleau définie (49) sont agencés en étant maintenus, axialement rotatifs et répartis dans la direction périphérique (U) entre un corps de serrage en forme de douille (21 ; 95) de l'écrou de serrage (19 ; 93) et le corps de base (3 ; 109 ; 119),
**en ce qu'**au moins une structure d'engagement de corps de base (59 ; 111 ; 121) est réalisée sur le corps de base (3 ; 109 ; 119), les corps de rouleaux (35) étant ou pouvant être mis en engagement par leur structure d'engagement de rouleau (49) avec l'au moins une structure d'engagement de corps de base (59 ; 111 ; 121) du corps de base (3 ; 109 ; 119), et
**en ce que** l'écrou de serrage (19 ; 93) peut être vissé sur le corps de base (3 ; 109 ; 119) et dévissé du corps de base (3 ; 109 ; 119) au moyen des structures d'engagement (49, 59 ; 111 ; 121) se trouvant en engagement les unes avec les autres, en faisant rouler les corps de rouleaux (35) sur le corps de base (3 ; 109 ; 119).

2. Dispositif de serrage selon la revendication 1, **caractérisé en ce que** la structure d'engagement de corps de base (121) est formée par un filetage avec au moins une rainure de filetage circonférentielle, la rainure de filetage réalisant au moins une nervure (131) s'étendant en forme d'hélice du côté extérieur autour du corps de base (119), il étant de préférence prévu que le filetage présente plusieurs pas et notamment le nombre de pas de filetage correspond au nombre de corps de rouleaux (35).

3. Dispositif de serrage selon la revendication 1, **caractérisé en ce que** sur le corps de base (3 ; 109) du dispositif de serrage (1) sont réalisées plusieurs zones d'engagement (61), notamment réparties dans la direction périphérique (U) et/ou espacées les unes des autres, avec une structure d'engagement de corps de base (59 ; 111), les corps de rouleaux (35) étant ou pouvant être amenés en engagement par leur structure d'engagement de rouleau (49) avec les structures d'engagement de corps de base (59 ; 111) du corps de base (3 ; 109), et
**en ce que** l'écrou de serrage (19 ; 93) peut être vissé sur le corps de base (3 ; 109) et dévissé du corps de base (3 ; 109) au moyen des structures d'engagement (49, 59 ; 111) des corps de rouleaux (35) et du corps de base (3 ; 109) se trouvant en engagement les unes avec les autres, notamment en faisant rouler les corps de rouleaux (35) sur le corps de base (3 ; 109).

4. Dispositif de serrage selon l'une quelconque des revendications précédentes, **caractérisé en ce que** la structure d'engagement de rouleaux (49) de chaque corps de rouleau (35) est formée par plusieurs rainures circonférentielles espacées les unes des autres dans la direction axiale des rouleaux, qui réalisent des nervures annulaires (51) s'étendant dans la direction périphérique autour du corps de rouleau (35) respectif, les flancs des nervures (51) étant notamment réalisés sous forme bombée.

5. Dispositif de serrage selon l'une quelconque des revendications précédentes, **caractérisé en ce que** chaque corps de rouleau (35) présente des tourillons (39) dépassant frontalement, au moyen desquels le corps de rouleau (35) respectif est maintenu de manière axialement rotative sur le corps de serrage (21) de l'écrou de serrage (19) ou **en ce que** chaque corps de rouleau (35) est monté de manière axialement rotative, notamment au moyen des tourillons (39), dans une cage de palier (41 ; 123) annulaire, notamment en forme d'anneau de cercle, de l'écrou de serrage (19), il étant de préférence prévu que la cage de palier annulaire (19) est réalisée en plusieurs parties avec plusieurs éléments de segment d'anneau (43), notamment de section transversale rectangulaire, et au moins un corps de rouleau (35) est associé à au moins une partie des éléments de segment d'anneau (43).

6. Dispositif de serrage selon l'une quelconque des revendications précédentes, **caractérisé en ce que** les corps de rouleaux (35) sont logés dans une cage de palier (41 ; 123), notamment une cage de fenêtre (41) avec des poches (133) pour les corps de rouleaux (35), les corps de rouleaux (35) étant notamment logés avec un grand jeu axial dans les poches (133) de la cage de fenêtre (41) ou la longueur axiale des poches (133) de la cage de fenêtre (41) correspondant essentiellement à la longueur axiale des corps de rouleaux (35), des poches (133) sélectionnées de la cage de fenêtre (41) présentant un décalage axial (135) par rapport aux autres poches (133) de la cage de fenêtre (41), le décalage axial (135) des poches (41) étant notamment adapté à un pas de filetage de la structure d'engagement de corps de base (121) et/ou à une structure d'engagement de corps de serrage (53) du corps de serrage en forme de douille (21, 95), structure d'engagement de corps de serrage (53) avec laquelle le corps de serrage (21, 95) est en engagement avec la structure d'engagement de rouleau (49) des corps de rouleaux (35), et/ou à un nombre de corps de rouleaux (35) .

7. Dispositif de serrage selon l'une quelconque des revendications précédentes, **caractérisé en ce que** le corps de serrage en forme de douille (21, 95) présente une structure d'engagement de corps de serrage (53) avec laquelle le corps de serrage (21, 95) est en engagement avec la structure d'engagement de rouleau (49) des corps de rouleaux (35), il étant de préférence prévu que la structure d'engagement de corps de serrage (53) est formée par plusieurs rainures circonférentielles espacées les unes des autres, qui réalisent des nervures annulaires (57) s'étendant du côté intérieur dans la direction périphérique (U) autour du corps de serrage (21) ou que la structure d'engagement de corps de serrage (53) est formée par un filetage avec au moins une rainure de filetage périphérique, la rainure de filetage réalisant au moins une nervure (131) s'étendant en forme d'hélice du côté intérieur dans la direction périphérique (U) autour du corps de serrage (21, 95), il étant de préférence prévu que le filetage présente plusieurs pas et notamment le nombre de pas de filetage correspond au nombre de corps de rouleaux (35).

8. Dispositif de serrage selon l'une quelconque des revendications précédentes, **caractérisé en ce que** le corps de serrage en forme de douille (21) présente un évidement (42) s'étendant du côté intérieur dans la direction périphérique (U), dans lequel la cage de palier annulaire (41 ; 123) est agencée de manière adaptée au contour, il étant de préférence prévu qu'une zone de paroi (55) du corps de serrage en forme de douille (21), délimitant l'évidement (42) du côté du fond, réalise la structure d'engagement de corps de serrage (53) du corps de serrage (21) et/ou que la structure d'engagement de corps de serrage (53) est agencée sur une zone de paroi (55), du côté intérieur, circonférentielle dans la direction périphérique (U), du corps de serrage en forme de douille (21).

9. Dispositif de serrage selon l'une quelconque des revendications précédentes, **caractérisé en ce que** l'appareil de serrage (17) présente une pince de serrage (11) agencée dans l'espace de logement (9), élastique dans la direction radiale (r), avec un cône extérieur, et **en ce que** la pince de serrage (11) peut être pressée au moyen de l'écrou de serrage (19) dans l'espace de logement (9), formant un cône intérieur, du corps de base (3 ; 109 ; 119) et qu'ainsi un objet agencé dans un espace de logement d'objet (15), notamment cylindrique, de la pince de serrage (11) peut être serré de manière solidaire en rotation, un élément de liaison annulaire (22) étant notamment prévu, par l'intermédiaire duquel l'écrou de serrage (19) est relié de manière amovible à la pince de serrage (11), notamment l'élément de liaison annulaire (22) étant relié au moyen de paliers à roulement (23) de manière axialement rotative avec le corps de serrage en forme de douille (21) de l'écrou de serrage (19) et/ou l'élément de liaison annulaire (22) étant relié ou pouvant être verrouillé avec la pince de serrage (11) au moyen d'un dispositif de verrouillage (137), notamment d'une fermeture à baïonnette.

10. Dispositif de serrage selon l'une quelconque des revendications 1 à 9, **caractérisé en ce que** l'écrou de serrage (93) présente un corps conique (97), notamment en forme de douille, relié au corps de serrage (95), qui présente une zone de paroi de cône intérieur (105) formant un cône intérieur, le corps conique (97) venant, par la zone de paroi de cône intérieur (105) lors d'un vissage de l'écrou de serrage (93) sur le corps de base (3, 119), en application, notamment à plat, avec une section de logement (98) du corps de base formant l'espace de logement (100) et pressant la section de logement (98) vers l'intérieur contre un objet agencé dans l'espace de logement (100), notamment cylindrique, et serrant ainsi l'objet de manière solidaire en rotation.

11. Dispositif de serrage selon l'une quelconque des revendications précédentes, **caractérisé en ce que** le corps de base (3) présente des fentes et/ou une butée d'extrémité, butée d'extrémité avec laquelle l'écrou de serrage (19) vient en application lors d'un vissage sur le corps de base (3), il étant de préférence prévu, que la butée d'extrémité est formée par au moins une zone de paroi (79) frontale ou orientée frontalement du corps de base ou par au moins une zone de paroi (81) du corps de base (3) délimitant une zone d'engagement de corps de base (61) dans la direction périphérique (U).

12. Dispositif de serrage selon l'une quelconque des revendications précédentes, **caractérisé en ce qu**'il est prévu un appareil de blocage pour bloquer l'écrou de serrage (19 ; 93) lors d'un vissage sur le corps de base (3 ; 109 ; 119), le corps de serrage en forme de douille (21 ; 95) présentant une nervure de blocage annulaire (75), notamment à paroi mince, de l'appareil de blocage, dépassant d'une paroi frontale (73) du corps de serrage en forme de douille (21), par laquelle l'écrou de serrage (19 ; 93) vient en application, notamment à plat, avec une zone de paroi d'application correspondante lors d'un vissage sur le corps de base (3 ; 109 ; 119).

13. Logement d'outil pour une machine-outil, notamment pour une fraiseuse, avec un dispositif de serrage selon l'une quelconque des revendications précédentes.

14. Logement d'outil selon la revendication 13, **caractérisé en ce que** le logement d'outil (1) présente un appareil de couplage (4) au moyen duquel le logement d'outil (1) peut être couplé à un appareil d'entraînement pour l'entraînement en rotation du logement d'outil, notamment à une broche d'entraînement d'une machine-outil.

15. Machine-outil, notamment fraiseuse, avec un logement d'outil (1) selon la revendication 13 ou 14.
